(19) Europäisches Patentamt
European Patent Office
Office européen des brevets

(11) **EP 3 938 637 B1**

(12) **FASCICULE DE BREVET EUROPEEN**

(45) Date de publication et mention de la délivrance du brevet:
**22.02.2023 Bulletin 2023/08**

(21) Numéro de dépôt: **20719674.2**

(22) Date de dépôt: **27.02.2020**

(51) Classification Internationale des Brevets (IPC):
**F02C 7/06** *(2006.01)*    **F01D 21/12** *(2006.01)*
**F02K 3/06** *(2006.01)*

(52) Classification Coopérative des Brevets (CPC):
**F02K 3/06; F01D 21/12; F02C 7/06;**
F01M 2011/1473; F05D 2220/32; F05D 2250/50;
F05D 2260/4031; F05D 2260/80; F05D 2260/82;
F05D 2260/83; F05D 2260/98; F05D 2270/303;
F16N 2200/04; F16N 2200/10; F16N 2210/02;

(Cont.)

(86) Numéro de dépôt international:
**PCT/FR2020/050381**

(87) Numéro de publication internationale:
**WO 2020/183088 (17.09.2020 Gazette 2020/38)**

(54) **PROCÉDÉ ET SYSTÈME DE SURVEILLANCE D'UN ÉTAT D'UN RÉDUCTEUR D'UNE TURBINE A GAZ**

VERFAHREN UND SYSTEM ZUR ÜBERWACHUNG DES ZUSTANDES EINES UNTERSETZUNGSGETRIEBES EINER GASTURBINE

METHOD AND SYSTEM FOR MONITORING A STATUS OF A REDUCTION GEARBOX OF A GAS TURBINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.03.2019 FR 1902573**

(43) Date de publication de la demande:
**19.01.2022 Bulletin 2022/03**

(73) Titulaire: **SAFRAN AIRCRAFT ENGINES**
**75015 Paris (FR)**

(72) Inventeurs:
• **COUPARD, Josselin, Xavier**
**77550 MOISSY-CRAMAYEL (FR)**
• **GARNIER, Alméric, Pierre, Louis**
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
**EP-A1- 3 109 416    FR-A1- 3 050 761**
**US-A1- 2017 145 852**

• **Robert F Handschuh ET AL: "Operational Influence on Thermal Behavior of High-Speed Helical Gear Trains", NASA/TM-2006-214344, 18 octobre 2006 (2006-10-18), XP055194372, Extrait de l'Internet: URL:http://ntrs.nasa.gov/search.jsp?R=2006 0056309 [extrait le 2015-06-09]**

(52) Classification Coopérative des Brevets (CPC):
(Cont.)
F16N 2210/12

**Description**

Technique antérieure

L'invention concerne la surveillance de l'état d'un système de réduction (aussi appelé réducteur) d'une turbine à gaz, tel que par exemple une boîte d'engrenages d'un turboréacteur ou plus généralement d'une turbomachine.

Elle a une application privilégiée dans le domaine de l'aéronautique, mais peut également être utilisée pour la surveillance de réducteurs intégrés dans des systèmes autres que des systèmes aéronautiques, comme par exemple dans des éoliennes, etc.

De façon connue, une turbine à gaz équipant un aéronef, comme par exemple un turboréacteur, est généralement équipée d'un réducteur qui permet de coupler différents éléments de la turbine à gaz sur un élément entraîné en rotation comme par exemple, sur l'arbre du compresseur de la turbine à gaz. Ce réducteur permet la transmission de puissance entre les différents éléments couplés par son intermédiaire et plus particulièrement, l'ajustement de manière proportionnelle des vitesses angulaires des éléments ainsi couplés. Un tel réducteur est par exemple une boîte ou un train d'engrenages situé entre l'arbre du compresseur basse-pression d'un turboréacteur et sa soufflante.

Un réducteur est donc une pièce importante du système de transmission de la turbine à gaz, qui est fortement sollicitée et susceptible de subir au fil des utilisations de la turbine à gaz (autrement dit des vols de l'aéronef équipé de cette dernière) des dégradations en raison notamment de son usure ou de son vieillissement. Une telle dégradation peut entraîner un dysfonctionnement du système de transmission de la turbine à gaz et avoir de graves conséquences. Il convient par conséquent de surveiller attentivement l'état du réducteur équipant une turbine à gaz afin d'être en mesure d'intervenir de façon opportune sur cette dernière lorsque l'état de ce réducteur se dégrade, par exemple en effectuant une maintenance ou en remplaçant celui-ci.

Il est connu de procéder à la surveillance d'un réducteur d'une turbine à gaz en s'appuyant sur une analyse vibratoire réalisée au moyen d'un capteur de vibration tel qu'un accéléromètre. Cette analyse vibratoire consiste à comparer l'amplitude du signal vibratoire acquis par le capteur de vibration à la fréquence d'engrènement avec l'amplitude du signal vibratoire contenu dans des bandes latérales, et à déduire en fonction du rapport de ces amplitudes, si le réducteur est dans un état opérationnel ou défaillant.

Une telle technique s'appuie sur le fait que lors d'un fonctionnement normal du réducteur, l'amplitude du signal vibratoire à la fréquence d'engrènement est normalement supérieure à l'amplitude du signal vibratoire dans les bandes latérales. L'état du réducteur peut donc être déduit en comparant le rapport des amplitudes à différents seuils prédéterminés. Par exemple, un rapport d'amplitudes de 5 mesuré lors d'une phase de décollage de l'aéronef indique un état quasi-neuf du réducteur, tandis qu'un rapport inférieur à 2 mesuré lors d'une même phase de décollage est susceptible d'indiquer qu'une maintenance doit être envisagée.

La fixation des seuils auxquels comparer le rapport d'amplitudes peut s'avérer compliquée. En outre, cette technique s'appuie sur la détection d'un signal vibratoire dans les bandes latérales dont la présence suppose l'existence d'une défaillance déjà avérée et bien installée sur le réducteur. En d'autres mots, la surveillance opérée via une telle technique conduit à statuer de façon booléenne sur l'endommagement du réducteur (le réducteur est défaillant ou non).

US 2017/0145852 A1 divulgue une méthode de surveillance de la santé d'un moteur.

Il existe donc un besoin d'un procédé de surveillance permettant de surveiller plus précisément et plus finement l'état d'un réducteur afin d'être en mesure de pouvoir diligenter au plus tôt une opération de maintenance ou de remplacement du réducteur le cas échéant.

Exposé de l'invention

La présente invention répond notamment à ce besoin en proposant un procédé de surveillance d'un état d'un réducteur (ex. réducteur de puissance) d'une turbine à gaz, comprenant, pour au moins un cycle d'utilisation du réducteur :

- une étape d'obtention d'au moins un ensemble de mesures d'une pluralité de paramètres réalisées sur au moins un intervalle de temps d'une durée déterminée lors d'au moins une phase de fonctionnement de la turbine à gaz, lesdits paramètres comprenant des paramètres de fonctionnement du réducteur incluant des températures d'une huile de lubrification du réducteur en entrée et en sortie du réducteur, et de la turbine à gaz incluant au moins un paramètre représentatif d'un régime de la turbine à gaz (tel que par exemple la vitesse de rotation de l'arbre basse pression de la turbine à gaz), ainsi qu'au moins un paramètre de contexte ;
- une étape de sélection, parmi ledit au moins un ensemble de mesures obtenu pour ladite au moins une phase de fonctionnement, d'un ensemble contenant des mesures stables au regard d'un critère de stabilité prédéterminé ;
- une étape de normalisation des mesures des températures de l'huile de lubrification en entrée et en sortie du réducteur de l'ensemble de mesures sélectionné en utilisant les mesures des paramètres de contexte de l'ensemble de mesures sélectionné ; et

- une étape d'évaluation, à partir de l'ensemble de mesures sélectionné, d'un rendement thermique du réducteur en utilisant un modèle physique définissant le rendement thermique à partir d'une différence entre la température de l'huile de lubrification en sortie du réducteur et la température de l'huile de lubrification en entrée du réducteur ;

ledit procédé de surveillance comprenant en outre :

- une étape de comparaison du rendement thermique évalué pour ledit au moins un cycle d'utilisation par rapport à au moins une signature de référence représentative d'un comportement opérationnel ou d'un comportement défaillant du réducteur ; et
- une étape de détermination d'un état du réducteur en fonction du résultat de l'étape de comparaison.

Une phase de fonctionnement de la turbine à gaz désigne une période temporelle d'un cycle d'utilisation de la turbine. Par exemple, lorsque la turbine à gaz considérée équipe un aéronef, une telle phase de fonctionnement peut correspondre à une phase d'un vol de l'aéronef telle qu'une phase de décollage, de croisière, de ralenti au sol, de taxi, de descente, ou encore d'arrêt.

Conformément à l'invention, un ou plusieurs ensembles de mesures sont collectés lors de chaque phase de fonctionnement de la turbine à gaz considérée, sur un ou plusieurs intervalles de temps ayant une durée déterminée (notamment plusieurs ensembles de mesures peuvent être collectés sur plusieurs intervalles de temps pour une phase de fonctionnement longue). Cette durée peut dépendre de la phase de fonctionnement considérée de l'aéronef, et être prédéterminée, comme par exemple 5 minutes pour une phase de ralenti au sol ou une phase de croisière. Mais elle peut être également déterminée de façon dynamique, par exemple en fonction de l'arrêt de la rotation du réducteur.

Par ailleurs, l'invention offre la possibilité de prendre en compte plusieurs cycles d'utilisation du réducteur lors de l'estimation de son état. Par cycle d'utilisation du réducteur on entend ici, un cycle d'utilisation de la turbine à gaz utilisant ce réducteur. A titre illustratif, un tel cycle d'utilisation correspond, pour une turbine à gaz équipant un aéronef, à un vol de l'aéronef.

Corrélativement, l'invention vise aussi un système de surveillance d'un état d'un réducteur d'une turbine à gaz, comprenant des modules, activés pour au moins un cycle d'utilisation du réducteur, lesdits modules comprenant :

- un module d'obtention, configuré pour obtenir au moins un ensemble de mesures d'une pluralité de paramètres réalisées sur au moins un intervalle de temps d'une durée déterminée lors d'au moins une phase de fonctionnement de la turbine à gaz, lesdits paramètres comprenant des paramètres de fonctionnement du réducteur incluant des températures d'une huile de lubrification du réducteur en entrée et en sortie du réducteur, et de la turbine à gaz incluant au moins un paramètre représentatif d'un régime de la turbine à gaz, ainsi qu'au moins un paramètre de contexte ;
- un module de sélection, configuré pour sélectionner parmi ledit au moins un ensemble de mesures obtenu pour ladite au moins une phase de fonctionnement, un ensemble contenant des mesures stables au regard d'un critère de stabilité prédéterminé ;
- un module de normalisation, configuré pour normaliser les mesures des températures de l'huile de lubrification en entrée et en sortie du réducteur de l'ensemble de mesures sélectionné en utilisant les mesures des paramètres de contexte de l'ensemble de mesures sélectionné ;
- un module d'évaluation, configuré pour évaluer à partir de l'ensemble de mesures sélectionné, un rendement thermique du réducteur en utilisant un modèle physique définissant le rendement thermique à partir d'une différence entre la température de l'huile de lubrification en sortie du réducteur et la température de l'huile de lubrification en entrée du réducteur ;

ledit système comprenant en outre :

- un module de comparaison, configuré pour comparer le rendement thermique évalué pour ledit au moins un cycle d'utilisation du réducteur par rapport à au moins une signature de référence représentative d'un comportement opérationnel ou d'un comportement défaillant du réducteur ; et
- un module de détermination, configuré pour déterminer un état du réducteur en fonction du résultat obtenu par le module de comparaison.

L'invention propose ainsi une surveillance de l'état d'un réducteur d'une turbine à gaz basée sur l'analyse de l'évolution de son rendement thermique au cours d'un ou de plusieurs cycles d'utilisation du réducteur. Ce rendement thermique caractérise de façon connue la quantité d'énergie dissipée ou perdue sous forme de chaleur lors du fonctionnement du réducteur, en raison notamment des frottements rencontrés par les différents éléments du réducteur lors de la rotation de l'arbre sur lequel il est placé.

Il est caractérisé conformément à l'invention à partir de la dissipation thermique constatée dans l'huile de lubrification du réducteur, qui est reflétée par la différence entre la température de l'huile en sortie du réducteur et la température de l'huile en entrée du réducteur, et d'un modèle physique liant cette dissipation thermique à certains paramètres de fonctionnement de la turbine à gaz comme par exemple à son régime (qui peut être caractérisé notamment par la vitesse de rotation de l'arbre du compresseur de la turbine à gaz).

Le rendement thermique rend compte avantageusement de la capacité du réducteur à réaliser sa fonction au sein de la turbine à gaz et est donc particulièrement pertinent pour évaluer les performances et déterminer l'état du réducteur. Une modification du rendement du réducteur et en particulier, une dérive de ce rendement par rapport à ce qui est attendu, peut en effet entraîner un dysfonctionnement du système de transmission de la turbine à gaz.

La comparaison du rendement thermique avec des signatures de référence conformément à l'invention offre la possibilité d'identifier différents états du réducteur :

- si le rendement thermique est compris dans une plage acceptable au niveau du réducteur, le réducteur peut être considéré comme étant dans un état opérationnel ;
- si le rendement est au contraire inférieur à celui d'une opération normale du réducteur mais au-delà d'un seuil d'acceptabilité, un état « à surveiller » peut être attribué au réducteur ;
- si le rendement est inférieur au seuil d'acceptabilité, cela signifie que le réducteur est défaillant et qu'une maintenant ou un remplacement doit être envisagé.

Cette comparaison peut être avantageusement répétée pour différents intervalles de temps considérés sur différentes plages de fonctionnement de la turbine à gaz, et au cours de différents cycles d'utilisation de la turbine à gaz et corrélativement du réducteur. L'invention, via la surveillance de l'évolution temporelle du rendement thermique du réducteur, permet ainsi de détecter rapidement une dérive du rendement thermique lié par exemple à son vieillissement, y compris lorsque celle-ci s'opère lentement. Elle permet d'envisager au plus tôt une réponse appropriée à cette dérive, comme par exemple une opération de maintenance. On note que l'observation du rendement thermique sur plusieurs phases de fonctionnement de la turbine à gaz permet avantageusement de détecter des problèmes affectant l'enceinte dans laquelle se trouve le réducteur, comme par exemple des problèmes d'étanchéité.

L'invention offre en outre la possibilité de réaliser une étude de tendance (« trend monitoring ») sur le rendement thermique du réducteur et sur son état. Ceci permet d'effectuer des prédictions et/ou des pronostics quant à l'état à venir du réducteur et de pouvoir planifier à l'avance des opérations de maintenance sur la turbine à gaz.

On note que l'invention a une application privilégiée, bien que non limitative, dans le contexte des moteurs aptes à délivrer de très fortes puissances (supérieures à 10 MW) comme par exemple les moteurs UHRB (Ultra High Bypass Ratio) qui présentent un très haut taux de dilution.

Le rendement thermique du réducteur dépend fortement des conditions dans lesquelles se trouve la turbine à gaz (ex. conditions climatiques, lors que la turbine à gaz équipe un aéronef), qui peuvent s'avérer instables. L'invention permet avantageusement de maitriser cette dépendance par rapport au contexte et à l'environnement dans lequel se trouve le réducteur et d'offrir par le biais de la surveillance du rendement thermique du réducteur un moyen fiable de connaître son état grâce aux étapes de sélection et de normalisation mises en oeuvre lors du procédé de surveillance. Ces étapes permettent de supprimer les effets liés au contexte dans lequel se trouve le réducteur et de pouvoir comparer via l'analyse de son rendement thermique l'état du réducteur sur plusieurs cycles d'utilisation.

Plus particulièrement, l'étape de sélection permet de sélectionner des mesures correspondant à des conditions de stabilité fonctionnelle (stabilité du régime de la turbine à gaz mais également des températures d'huile en entrée/sortie du réducteur utilisées pour évaluer le rendement thermique).

A cet effet par exemple, l'étape de sélection de l'ensemble de mesures peut comprendre, dans un mode particulier de réalisation, une étape d'évaluation, pour plusieurs ensembles de mesures correspondant à un intervalle de temps ayant ladite durée déterminée :

- d'un premier score dit de stabilité, égal à une somme pondérée évaluée sur les paramètres de fonctionnement, de la proportion des mesures de chaque paramètre de fonctionnement de l'ensemble considéré se trouvant dans une plage de valeurs prédéfinie pour ce paramètre de fonctionnement ;
- d'un second score de stabilité, égal à une somme pondérée évaluée sur les paramètres de fonctionnement, de la proportion des mesures de chaque paramètre de fonctionnement dans l'ensemble considéré présentant une dispersion théorique déterminée pour ce paramètre de fonctionnement ;

ledit ensemble de mesure sélectionné lors de l'étape de sélection correspondant à l'ensemble de mesure maximisant une somme pondérée du premier score de stabilité et du second score de stabilité.

Les pondérations appliquées dans le calcul des scores et lors de la sélection de l'ensemble de mesures peuvent être déterminées expérimentalement ou par des experts, en tenant compte de la sensibilité du rendement thermique par rapport à chaque paramètre de fonctionnement considéré (c'est-à-dire de l'influence de chaque paramètre sur le rendement thermique).

Autrement dit, on sélectionne pour évaluer le rendement thermique sur un cycle d'utilisation du réducteur, un intervalle de temps sur lequel le nombre de mesures qui vérifient un critère de stabilité fonctionnelle et un critère de dispersion est maximum. Le critère de dispersion est évalué avantageusement à partir d'un modèle théorique des valeurs attendues pour les paramètres de fonctionnement : ceci permet de pallier à une défaillance des capteurs des paramètres de fonctionnement. Bien entendu, d'autres critères peuvent être envisagés pour sélectionner les mesures à considérer lors de l'évaluation du rendement thermique, mais on privilégiera des critères qui permettent par exemple de s'assurer que le régime de la turbine à gaz est stabilisée, que l'assiette de l'aéronef embarquant le cas échéant la turbine à gaz est horizontale (hypothèse correcte notamment lors des phases de taxi, croisière et de décollage), que le niveau d'huile de lubrification dans le circuit d'huile est suffisant, que la pression de l'huile de lubrification est constante, etc.

Outre la sélection de mesures « stabilisées », l'étape de normalisation permet de rendre comparables des rendements thermiques correspondant à des conditions d'exploitation différentes de la turbine à gaz et du réducteur. Elle permet de s'affranchir de l'influence de paramètres de contexte comme par exemple de la température et/ou de la pression atmosphérique ambiantes qui peuvent avoir une influence importante sur le rendement thermique du réducteur.

On note que l'invention ne se limite pas à la collecte des paramètres de fonctionnement précités (régime et températures d'huile en entrée/sortie du réducteur). D'autres paramètres comme par exemple la pression de l'huile, le niveau de l'huile ou encore lorsque la turbine à gaz équipe un aéronef, l'assiette de l'aéronef peuvent être envisagés et utilisés notamment pour sélectionner l'ensemble des mesures sur lequel va être évalué le rendement thermique permettant la surveillance de l'état du réducteur.

Pour déterminer plus finement l'état du réducteur, d'autres indicateurs peuvent être envisagés en combinaison avec le rendement thermique du réducteur.

Ainsi, dans un mode particulier de réalisation, le procédé de surveillance comprend en outre une étape d'évaluation d'au moins un indicateur dit de santé du réducteur parmi au moins :

- un indicateur de marge d'échauffement de la température de l'huile de lubrification entre l'entrée et la sortie du réducteur ;
- un indicateur de marge de la température de l'huile de lubrification en sortie du réducteur ;
- un indicateur de marge de fonctionnement en température du réducteur dans des conditions de pire cas ;
- un indicateur de marge de pression de l'huile de lubrification lors d'une phase de fonctionnement prédéterminée de la turbine à gaz ; et
- un indicateur de marge du rendement thermique du réducteur ;

et dans lequel, l'étape de détermination de l'état du réducteur tient compte également dudit au moins un indicateur de santé évalué.

Conformément à l'invention, le rendement thermique du réducteur est évalué à partir d'un modèle physique tenant compte de la dissipation thermique constatée dans l'huile de lubrification du réducteur. Des défaillances au niveau du réducteur et notamment de ses pièces tournantes (ex. des engrenages du réducteur) ont pour effet de modifier les échanges thermiques constatés au niveau du circuit de l'huile de lubrification. Les indicateurs précités qui caractérisent les marges d'échauffement ou de température de l'huile de lubrification fournissent donc des informations complémentaires utiles par rapport au rendement thermique du réducteur qui permettent d'analyser plus finement l'état de santé du réducteur.

Par exemple, l'indicateur de marge d'échauffement de la température de l'huile de lubrification entre l'entrée et la sortie du réducteur traduit la capacité du réducteur à être lubrifié par l'huile qui lui est fournie. La prise en compte de cet indicateur en plus du rendement thermique offre une meilleure visibilité pour opérer un déclenchement rapide d'une opération de maintenance sur le réducteur.

L'indicateur de marge de la température de l'huile de lubrification en sortie du réducteur permet de tenir compte de tout le circuit d'huile de lubrification. L'indicateur de marge de pression de l'huile de lubrification lors d'une phase de fonctionnement prédéterminée de la turbine à gaz, et notamment lorsque la turbine à gaz équipe un aéronef lors d'une phase de décollage de l'aéronef (au cours de laquelle la dissipation thermique est la plus importante), permet de déterminer de façon simple si les performances de lubrification de l'huile sont suffisantes.

Dans un autre mode de réalisation, le procédé de surveillance comprend en outre une étape d'évaluation d'au moins un indicateur dit de tendance caractérisant un usage du réducteur parmi au moins :

un indicateur représentatif d'un nombre de cycles d'utilisation du réducteur et/ou d'un nombre de cycles d'utilisation du réducteur depuis une opération de maintenance réalisée sur le réducteur ;

un indicateur représentatif d'un temps d'utilisation du réducteur et/ou d'un temps d'utilisation du réducteur depuis une opération de maintenance réalisée sur le réducteur ;

un indicateur représentatif d'un nombre de cycles d'utilisation du réducteur depuis une opération de maintenance réalisée sur la turbine à gaz ;

un indicateur représentatif d'un temps d'usage du réducteur à haute température ;

un indicateur représentatif d'un temps d'usage du réducteur avec un taux de particules élevé dans l'huile de lubrification du réducteur ;

et dans lequel, l'étape de détermination de l'état du réducteur tient compte également dudit au moins un indicateur de tendance évalué.

Ces indicateurs reflètent l'usage du réducteur et permettent d'estimer un état de fatigue du réducteur compte tenu de son exploitation. Par exemple, la somme pondérée de ces indicateurs peut être utilisée pour dériver une probabilité de dysfonctionnement du réducteur qui combinée à l'analyse du rendement thermique permet d'affiner l'estimation de l'état du réducteur.

Dans un mode particulier de réalisation, le procédé comprend en outre :

- une étape de détection si les mesures obtenues de la température en entrée et de la température en sortie du réducteur comprennent des valeurs aberrantes ; et

- une étape d'élimination desdites valeurs aberrantes ;

dans lequel :

- une valeur aberrante est détectée pour une dite température lorsqu'elle est incohérente avec une valeur théorique déterminée pour cette température en fonction du régime de la turbine à gaz ; et / ou

- une valeur aberrante est détectée pour la température en entrée du réducteur lorsque cette valeur présente un écart supérieur à un seuil prédéterminé par rapport à une mesure de la température ambiante ; et / ou

- une valeur aberrante est détectée pour la température en sortie du réducteur lorsque cette valeur présente un écart supérieur à un seuil prédéterminé par rapport à une température de référence ; et / ou

une valeur aberrante est détectée pour la température en sortie du réducteur lorsque cette valeur est inférieure à la valeur de la température en entrée du réducteur.

Ceci permet de ne retenir pour l'évaluation du rendement thermique que des valeurs pertinentes et d'améliorer son estimation.

En outre, cela permet de limiter la quantité de mesures qui doivent être stockées (par exemple à bord de l'aéronef dans le cas d'une turbine à gaz équipant un aéronef) ou transmises au module d'obtention du système de surveillance pour évaluation du rendement thermique.

Différentes architectures du système de surveillance selon l'invention peuvent être envisagées : les différents modules du système de surveillance peuvent être localisés en un même endroit ou répartis sur plusieurs entités.

Ainsi, dans un mode particulier de réalisation, le système de surveillance selon l'invention comprend en outre une pluralité de capteurs embarqués dans la turbine à gaz et configurés pour acquérir lesdites mesures des paramètres de fonctionnement et de contexte sur une pluralité d'intervalles de temps ayant ladite durée déterminée.

A titre illustratif, dans le contexte d'une turbine à gaz équipant un aéronef, le système de surveillance peut être constitué d'une partie embarquée à bord de l'aéronef, comprenant notamment les capteurs précités, et d'une autre partie située dans une entité au sol, l'aéronef et ladite entité pouvant communiquer via une liaison satellite ou une interface ARINC.

Dans un mode particulier de réalisation dans lequel ladite turbine à gaz équipe un aéronef, le procédé de surveillance comprend en outre :

- un module de filtrage des mesures acquises par ladite pluralité de capteurs, configuré pour éliminer desdites mesures celles présentant des valeurs aberrantes au regard d'au moins un critère prédéterminé ;

- un module de sélection, configuré pour sélectionner parmi les mesures filtrées, celles correspondant à au moins une phase de fonctionnement prédéterminée de l'aéronef ; et

- un module de transmission configuré pour transmettre au module d'obtention les mesures sélectionnées.

Dans un mode particulier de réalisation, le système de surveillance comprend en outre un module de compression, configuré pour compresser les mesures sélectionnées, le module de transmission étant configuré pour transmettre au module d'obtention les mesures sélectionnées sous forme compressée.

Ces modes de réalisation permettent de réduire la quantité de mesures à transmettre au module d'obtention pour l'évaluation du rendement thermique du réducteur.

Dans un mode particulier de réalisation, les différentes étapes du procédé de surveillance sont déterminées par des instructions de programmes d'ordinateurs.

En conséquence, l'invention vise aussi un programme d'ordinateur sur un support d'informations, ce programme étant susceptible d'être mis en oeuvre dans un système de surveillance ou plus généralement dans un ordinateur, ce programme comportant des instructions adaptées à la mise en oeuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente, dans son environnement, un système de surveillance conforme à l'invention dans un mode particulier de réalisation;

[Fig. 2] la figure 2 représente une coupe d'un turboréacteur comprenant un réducteur sur lequel est réalisée une surveillance conformément à l'invention ;

[Fig. 3] la figure 3 représente un exemple de réducteur inclus dans le turboréacteur de la figure 2 sur lequel est réalisée une surveillance conformément à l'invention ;

[Fig. 4] la figure 4 représente le circuit d'huile de lubrification du réducteur de la figure 3, dans un mode particulier de réalisation ;

[Fig. 5] la figure 5 représente l'architecture matérielle d'une entité au sol du système de surveillance de la figure 1 participant à la surveillance du réducteur de la figure 3 ;

[Fig. 6A] la figure 6A représente les étapes du procédé de surveillance mises en oeuvre à bord d'un aéronef équipé du turboréacteur de la figure 2, dans un mode particulier de réalisation ;

[Fig. 6B] la figure 6B représente les étapes du procédé de surveillance mises en oeuvre par l'entité au sol représentée sur la figure 5, dans un mode particulier de réalisation;

[Fig. 7] la figure 7 représente un exemple de suivi du rendement thermique du réducteur de la figure 3.

Description des modes de réalisation

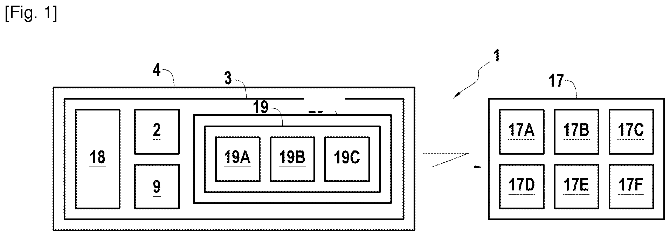

La figure 1 représente, dans son environnement, un système de surveillance 1 d'un état d'un réducteur 2 d'une turbine à gaz 3, conforme à l'invention, dans un mode particulier de réalisation.

Dans l'exemple envisagé à la figure 1, la turbine à gaz 3 est à titre illustratif un turboréacteur à forte puissance équipant un avion 4, tel que par exemple un turboréacteur UHRB, et le réducteur 2 est une boîte ou un train d'engrenages. L'invention peut toutefois être utilisée dans d'autres contextes pour d'autres turbines à gaz à forte puissance (par exemple supérieure à 1 MW), ainsi que dans d'autres domaines que l'aéronautique, comme par exemple pour une turbine à gaz équipant une éolienne, etc.

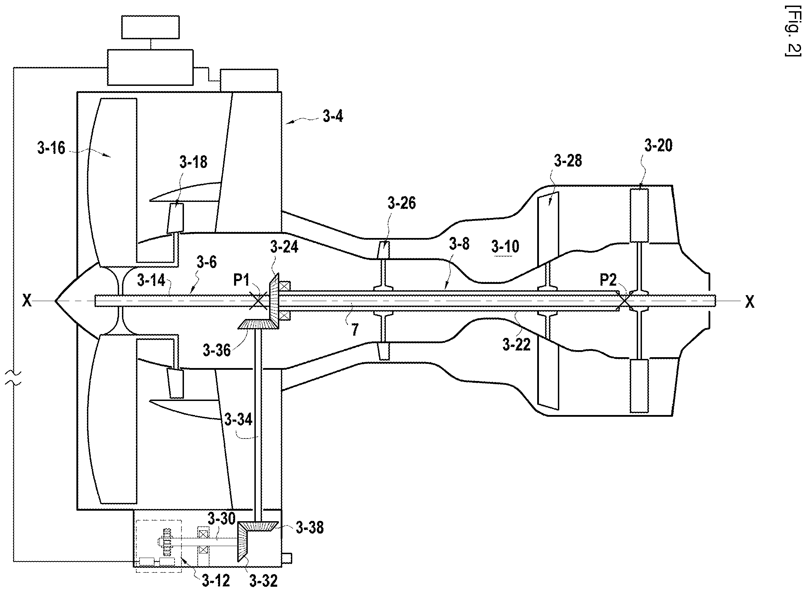

La figure 2 illustre un schéma en coupe du turboréacteur double-corps double-flux UHRB 3 équipé du réducteur 2. La structure d'un tel turboréacteur est connue en soi et n'est rappelée que brièvement ici.

Le turboréacteur 3 d'axe longitudinal X-X se compose, de façon connue, d'un carter de soufflante 3-4, d'un corps basse-pression 3-6, d'un corps haute-pression 3-8, d'une chambre de combustion 3-10 et d'un boîtier d'entraînement d'accessoires 3-12 (ou AGB pour « Accessory Gear Box »).

Le corps basse-pression 3-6 comporte un arbre basse-pression 3-14, centré sur l'axe longitudinal X-X, une soufflante 3-16 montée sur l'extrémité avant de l'arbre basse-pression, un compresseur basse-pression 3-18 fixé sur la soufflante en aval de celle-ci, et une turbine basse-pression 3-20 montée sur l'extrémité arrière de l'arbre basse-pression.

Le corps haute-pression 3-8 comporte un arbre haute-pression 3-22 disposé concentriquement autour de l'arbre basse-pression 3-14, un pignon conique 3-24 monté à l'extrémité avant de l'arbre haute-pression, un compresseur haute-pression 3-26 monté sur l'arbre haute-pression en aval du pignon 3-24 et une turbine haute-pression 3-28 montée sur l'extrémité arrière de l'arbre haute-pression.

Pour des raisons de clarté, les différents compresseurs et turbines des corps basse-pression et haute-pression du turboréacteur 3 ont été représentés sur la figure 2 avec un unique étage d'aubes. Bien entendu, et de façon bien connue en soi, ces éléments peuvent porter plusieurs étages d'aubes.

Le boîtier d'entraînement d'accessoires 3-12 est fixé, par exemple, sur une face inférieure 3-4a du carter de soufflante 3-4. Ce boîtier 3-12 comporte ici un arbre dit « accessoire » 3-30 portant à son extrémité arrière un pignon conique 3-32. L'arbre 3-30 du boîtier d'entraînement d'accessoires 3-12 est entraîné en rotation par l'arbre haute-pression 3-22 via un arbre de renvoi 3-34 portant un pignon conique 3-36 à son extrémité supérieure et un pignon conique 3-38 à son extrémité inférieure. Dans l'exemple envisagé ici, le réducteur 2 est un train d'engrenages positionné entre la soufflante 3-16 et la turbine basse-pression 3-20, par exemple aux positions P1 (juste avant le pignon conique 3-36) ou P2 (juste en amont de la turbine basse-pression 3-20) indiquées sur la figure 2.

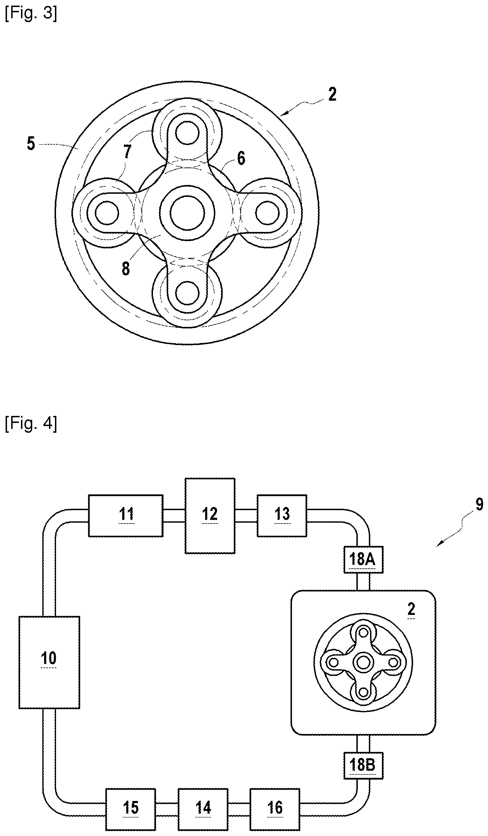

La figure 3 représente schématiquement le réducteur 2. Dans le mode de réalisation décrit ici, le réducteur 2 est par exemple un train d'engrenages épicycloïdal permettant de coupler entre eux plusieurs éléments en rotation de la turbine à gaz 3 (plusieurs arbres ou rotors) ayant des vitesses de rotation différentes. Le réducteur 2 est un système de transmission de puissance réduisant (ou augmentant) la vitesse de rotation entre les éléments entraînés en rotation par son intermédiaire. Il comprend à cet effet de façon connue, deux engrenages (ou roues dentées) dits planétaires 5 et 6 entre lesquels tournent une pluralité d'engrenages (ou roues dentées) dits satellites 7. Les engrenages satellites 7 sont maintenus par un châssis mobile 8.

Bien entendu cet exemple n'est donné qu'à titre illustratif et l'invention s'applique à d'autres types de réducteurs susceptibles d'être utilisés dans une turbine à gaz.

Dans l'exemple envisagé ici, le réducteur 2 est lubrifié au moyen d'un circuit d'huile 9 représenté schématiquement sur la figure 4. Le circuit d'huile 9 comprend de façon connue, un réservoir d'huile 10, une pompe principale 11, un filtre 12, un échangeur de chaleur 13, un détecteur de particules 14 (équipé d'aimants permettant de capter les particules), et une pompe de récupération 15. Il peut comprendre également un boîtier d'accessoires 16, branché sur le réducteur 2 et permettant d'entraîner en rotation différents types d'équipements comme notamment des générateurs électriques, des pompes mécaniques, des pompes de carburant, des pompes de lubrification, etc.

On note que d'autres schémas de circuit d'huile permettant de lubrifier le réducteur 2 peuvent être envisagés en variante.

A titre illustratif, on estime qu'un réducteur tel que le réducteur 2 lorsqu'il équipe un turboréacteur à forte puissance comme le turboréacteur UHBR 3, voit passer environ 40% de la puissance du turboréacteur et doit dissiper jusqu'à 30 MW par heure pendant une phase de fonctionnement de l'avion équipé du turboréacteur telle que la phase de décollage. Cette dissipation sous forme de chaleur est due à plusieurs phénomènes, et notamment à des phénomènes de conduction thermique entre les pièces métalliques composant le réducteur 2, des phénomènes de convection liés à la circulation de l'huile de lubrification du réducteur 2, et des phénomènes de rayonnement inhérent au réducteur 2.

Compte tenu de cette importante sollicitation du réducteur 2 et de sa fonction majeure dans le système de transmission du turboréacteur 3, les inventeurs ont eu l'idée de surveiller l'état du réducteur 2 en analysant l'évolution de son rendement thermique dans le temps. A cet effet, le rendement thermique du réducteur 2 est estimé, conformément à l'invention, à partir d'un modèle physique et d'une mesure de la dissipation thermique par l'huile de lubrification du réducteur 2, en se plaçant dans des conditions dans lesquelles la dissipation thermique par conduction thermique et par rayonnement peut être considérée comme répétable (reproductible).

Une modification du rendement thermique du réducteur 2 étant susceptible d'entraîner un dysfonctionnement du système de transmission de puissance du turboréacteur 3, le rendement thermique du réducteur 2 apparaît comme un facteur particulièrement pertinent et déterminant pour surveiller l'état de ce réducteur 2.

La surveillance de l'état du réducteur 2 est réalisée comme mentionné précédemment par le système de surveillance 1. En référence à la figure 1, dans le mode de réalisation décrit ici, le système de surveillance 1 comprend à cet effet une partie embarquée à bord de l'avion équipé du turboréacteur 3 et une partie intégrée dans une entité au sol 17. Une telle entité est par exemple un serveur ou plus généralement un ordinateur géré par exemple par le propriétaire de l'avion.

La partie embarquée à bord de l'avion comprend une pluralité de capteurs 18, connus en soi, embarqués dans le turboréacteur 3, et configurés pour acquérir des mesures de divers paramètres (paramètres de fonctionnement et paramètres de contexte) lors de vols de l'avion. Ces paramètres sont détaillés davantage ultérieurement : ils comprennent notamment la température et la pression atmosphérique ambiantes, le ou les régimes (ou vitesses) de rotation du turboréacteur, les températures de l'huile de lubrification du réducteur 2 en entrée et en sortie du réducteur 2, etc. Les capteurs 18 comprennent donc des capteurs de température, de pression, de vitesse, etc. Ils peuvent intégrer des capteurs déjà prévus à bord de l'avion (ex. capteur de pression d'huile et de pression atmosphérique, de vitesses de rotation des compresseurs basse pression et haute pression, capteur de température ambiante placé au niveau de la soufflante du turboréacteur 3, etc.) ainsi que des capteurs propres à l'invention.

Ainsi, comme illustré sur la figure 4, les capteurs 18 comprennent notamment un capteur 18A de température placé en entrée du réducteur 2, apte à mesurer la température de l'huile de lubrification en entrée du réducteur 2, et un capteur de température 18B placé en sortie du réducteur 2, apte à mesurer la température de l'huile de lubrification en sortie du réducteur 2. Le capteur 18A peut être placé à cet effet sur la ligne d'alimentation du circuit d'huile 9, à la sortie de l'échangeur de chaleur 13. Le capteur 18B peut être placé quant à lui sur l'enceinte (carter) hébergeant le réducteur 2, au plus proche de celui-ci, par exemple sur une tôle de récupération de l'huile de lubrification prévue sur cette enceinte. On note que les mesures de température réalisées par les capteurs 18A et 18B peuvent être réalisées directement sur l'huile de lubrification ou sur les canalisations transportant cette huile de lubrification dans le circuit d'huile 9.

La partie du système de surveillance 1 embarquée à bord de l'avion comprend également différents modules 19 de traitement des données acquises par les capteurs 18. Ces modules sont, dans le mode de réalisation décrit ici, intégrés dans le calculateur du turboréacteur 3 (aussi connu sous le nom de FADEC pour Full Authority Digital Engine Control). Il s'agit ici de modules logiciels 19A-19C, qui réalisent sur les mesures acquises par les capteurs 18 différents traitements et notamment : un filtrage des mesures destiné à éliminer les mesures ayant des valeurs aberrantes (module de filtrage 19A), une sélection des mesures correspondant à des phases de fonctionnement de l'avion 4 et a fortiori du turboréacteur 3 auxquelles on s'intéresse lors de la surveillance du réducteur 2 (module de sélection 19B), et une transmission des mesures filtrées sélectionnées à l'entité au sol 17 (module de transmission 19C).

Dans le mode de réalisation décrit ici, le module de transmission 19C comprend un module de compression (non représenté sur la figure), configuré pour compresser les mesures filtrées sélectionnées avant de les transmettre à l'entité au sol 17. Le module de transmission 19C s'appuie en outre, pour transmettre les mesures acquises par les capteurs 18 à l'entité au sol 17 afin de lui permettre d'évaluer le rendement thermique du réducteur 2, sur une interface de communication sans fil lui permettant de communiquer avec cette entité au sol 17, comme par exemple une interface de communication par satellite.

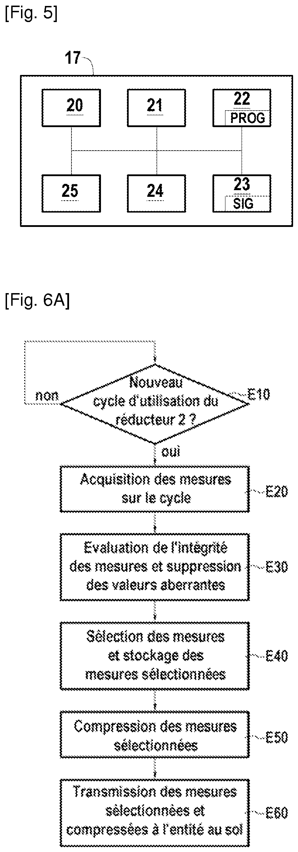

Comme mentionné précédemment, l'entité au sol 17 est un ordinateur dont l'architecture matérielle est représentée schématiquement à la figure 5.

Elle comprend un processeur 20, une mémoire vive 21, une mémoire morte 22, une mémoire flash non volatile 23, des moyens de communication 24 comprenant une interface de communication par satellite, lui permettant de communiquer notamment avec le calculateur embarqué dans l'avion 4, et des moyens d'entrée/sortie 25, tels qu'un clavier, un écran, etc.

Dans le mode de réalisation décrit ici, la mémoire morte 22 de l'entité au sol 17 constitue un support d'enregistrement conforme à l'invention, lisible par le processeur 20 et sur lequel est enregistré un programme d'ordinateur PROG conforme à l'invention, comportant des instructions pour l'exécution d'une partie des étapes du procédé de surveillance selon l'invention. Ce programme d'ordinateur PROG définit des modules fonctionnels et logiciels de l'entité au sol 17 qui utilisent ou s'appuient sur les éléments matériels 20-25 de l'entité au sol 17 mentionnés précédemment. Ces modules comprennent notamment, comme illustré à la figure 1 :

-     un module 17A d'obtention, configuré pour obtenir des mesures réalisées au moyen des capteurs 18, d'une pluralité de paramètres incluant des paramètres de fonctionnement du réducteur 2 (comprenant en particulier la température de l'huile de lubrification du réducteur 2 en entrée et en sortie du réducteur 2) et du turboréacteur 3 (comprenant ici notamment le régime du turboréacteur 3 représenté par les vitesses de rotation respectives N1 et N2 des arbres basse pression 3-22 et haute pression 3-14 du turboréacteur 3) ainsi qu'au moins un paramètre de contexte représentatif de l'environnement dans lequel se trouve le réducteur 2, à savoir ici la température ambiante (notée T12) et la pression atmosphérique ambiante (notée PS0) ;
-     un module 17B de sélection, configuré pour sélectionner parmi les mesures des paramètres obtenues par le module d'obtention 17A, un ensemble de mesures considérées comme stables au regard d'un critère de stabilité prédéterminé détaillé ultérieurement ;
-     un module 17C de normalisation, configuré pour normaliser les mesures de paramètres de fonctionnement de l'ensemble de mesures sélectionné en utilisant les mesures des paramètres de contexte contenues dans l'ensemble de mesures sélectionné ; et
-     un module 17D d'évaluation, configuré pour évaluer sur l'intervalle de temps correspondant à l'ensemble de mesures sélectionné, le rendement thermique du réducteur 2 en utilisant un modèle physique (désigné par MOD) définissant le rendement thermique à partir de la différence entre la température de l'huile de lubrification en sortie du réducteur 2 et la température de l'huile de lubrification en entrée du réducteur 2.

Les modules 17A à 17D sont activés pour au moins un cycle d'utilisation du réducteur 2, autrement dit du turboréacteur 3. Dans l'exemple envisagé ici, un cycle d'utilisation du réducteur 2 coïncide avec un vol de l'avion 4.

Les modules fonctionnels de l'entité au sol 17 définis par le programme PROG comprennent en outre :

- un module 17E de comparaison, configuré pour comparer le rendement thermique évalué pour un ou plusieurs cycles d'utilisation du réducteur par rapport à au moins une signature de référence représentative d'un comportement opérationnel ou d'un comportement défaillant du réducteur 2. Dans le mode de réalisation décrit ici, les signatures de référence sont stockées dans une base de signatures SIG mémorisée par exemple dans la mémoire non volatile 23 de l'entité au sol 17 ; et
- un module 17F de détermination, configuré pour déterminer un état du réducteur 2 en fonction du résultat obtenu par le module de comparaison 17E.

Les fonctions et le mode de fonctionnement des modules 17A à 17F ainsi que des modules 19A à 19C du système de surveillance 1 sont décrites plus en détail ultérieurement en référence aux étapes du procédé de surveillance selon l'invention.

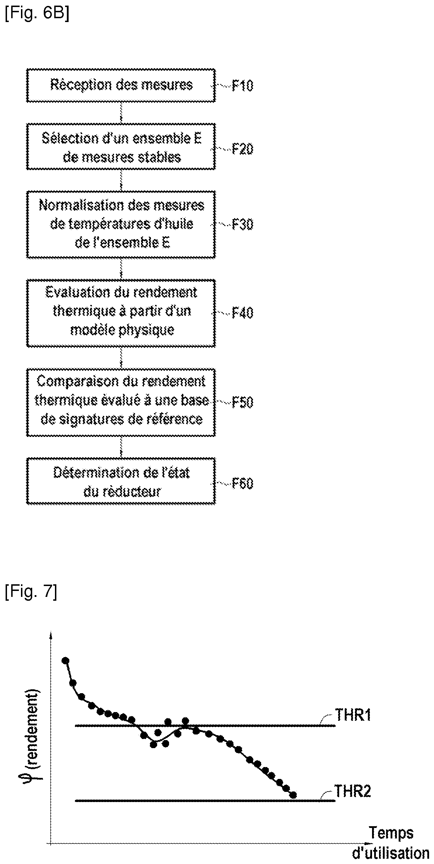

Les figures 6A et 6B représentent les principales étapes du procédé de surveillance selon l'invention tel qu'il est mis en oeuvre par le système de surveillance 1 pour surveiller l'état du réducteur 2, dans un mode particulier de réalisation.

Dans ce mode particulier de réalisation, le procédé de surveillance comprend une première série d'étapes (i.e. étapes E10 à E60) mise en oeuvre par la partie 19 du système de surveillance 1 embarquée à bord de l'avion 4 (illustrée à la figure 6A), et une seconde série d'étapes (i.e. étapes F10 à F60) réalisée par l'entité au sol 17 (illustrée à la figure 6B). On suppose ici que les étapes représentées sur les figures 6A et 6B sont mises en oeuvre à chaque nouveau cycle d'utilisation du réducteur 2, autrement dit ici, à chaque nouveau vol de l'avion 4 équipé du turboréacteur 3 comprenant le réducteur 2.

En référence à la figure 6A, lors de chaque vol de l'avion 4 (étape E10), des mesures de différents paramètres sont acquises au moyen des capteurs 18 embarqués à bord de l'avion 4. Ces mesures comprennent :

- des mesures de paramètres de fonctionnement du turboréacteur 3, et plus particulièrement ici des régimes de rotation N1 et N2 des arbres du compresseur basse pression et du compresseur haute pression du turboréacteur 3 ;
- des mesures de paramètres de fonctionnement du réducteur 2, et plus particulièrement ici de la température Toil_in de l'huile de lubrification du réducteur 2 en entrée de celui-ci, et de la température Toil_out de l'huile de lubrification en sortie du réducteur 2, mesurées respectivement par les capteurs 18A et 18B ; et
- des mesures de paramètres de contexte, et plus particulièrement ici, de la température ambiante T12 et de la pression atmosphérique ambiante PS0.

On note que d'autres mesures de paramètres de fonctionnement ou de contexte peuvent être collectées lors du vol de l'avion 4 par les capteurs 18, comme par exemple, des mesures de la pression de l'huile de lubrification en sortie du réducteur 2, de la sévérité opérationnelle, etc., ces mesures pouvant être utilisées notamment par le système de surveillance 1 pour dériver d'autres indicateurs permettant de suivre l'état du réducteur 2, comme détaillé davantage ultérieurement.

Dans le mode de réalisation décrit ici, les mesures précitées sont acquises par les capteurs 18 de façon continue au cours du vol (avec une fréquence d'acquisition dépendant du capteur ou paramétrable). Elles sont transmises par les capteurs 18 au calculateur pour traitement par les modules 19A-19C.

Le module 19A vérifie alors l'intégrité (i.e. la validité) des mesures de températures réalisées par les capteurs 18A et 18B qui vont être utilisées pour évaluer l'état du réducteur 2 (étape E30), en vue de détecter la présence de valeurs aberrantes.

A cet effet, il effectue un test de cohérence des mesures obtenues par rapport à des valeurs théoriques, définies en fonction du régime du turboréacteur 3 (donné par les mesures des vitesses de rotation N1 et N2 également acquises par les capteurs 18). Ces valeurs théoriques sont connues du concepteur du turboréacteur 3, et correspondent aux valeurs limites en termes de pression, de températures d'huile, de régimes de rotation, etc. du turboréacteur 3. Les mesures incohérentes au regard de ces valeurs théoriques sont considérées comme des valeurs aberrantes et sont éliminées (supprimées) par le module de filtrage 19A.

Le module de filtrage 19A peut vérifier d'autres conditions pour détecter si les mesures de températures remontées par les capteurs 18A et 18B sont valides. Ainsi, dans le mode de réalisation décrit ici, il vérifie en outre :

- si la température Toil_in se trouve dans une plage de valeurs présentant un écart prédéterminé avec la température ambiante : une valeur aberrante est détectée si la valeur de la température Toil_in en entrée du réducteur 2 présente un écart supérieur à un seuil prédéterminé par rapport à la mesure correspondante de la température ambiante T12 (c'est-à-dire acquise au même instant). Le seuil considéré est par exemple pris égal à 30°C ; et / ou
- si la température Toil_out se trouve dans une plage de valeurs présentant un écart prédéterminé avec une température de référence, déterminée de façon expérimentale. Une telle température de référence correspond par exemple à la température de fonctionnement de l'huile de lubrification du réducteur 2 (par exemple 120°C). Une valeur aberrante est détectée pour la température Toil_out en sortie du réducteur lorsque cette valeur présente un écart supérieur à un seuil prédéterminé par rapport à une température de référence (par exemple 5°C pour une température de référence de 120°C) ; et / ou
- si la température Toil_out est supérieure à la température Toil-in : une valeur aberrante est détectée pour la température Toil_out en sortie du réducteur lorsque cette valeur est inférieure à la valeur de la température Toil in en entrée du réducteur.

En outre le module de filtrage 19A peut également s'assurer qu'au démarrage du turboréacteur 3, les températures Toil_out et Toil_in présentent des valeurs similaires ou identiques.

Suite au filtrage des valeurs aberrantes, le module 19B de sélection sélectionne les mesures acquises par les capteurs 18 (et filtrées le cas échéant par le module de filtrage 19A), correspondant à au moins une phase de fonctionnement prédéterminée du turboréacteur 3 (qui correspond ici à au moins une phase du vol de l'avion 4). Différentes phases du vol peuvent être considérées selon la surveillance qui est envisagée et les phénomènes ou dégradations spécifiques que l'on souhaite détecter (grippage du réducteur, rendement maximum, état du réducteur, etc.) : ralenti au sol, décollage, montée, croisière, descente ou arrêt du moteur. Ces phases peuvent être détectées, par exemple à partir des mesures de vitesses de rotation N1 et N2 des arbres basse-pression et haute-pression du turboréacteur 3, de façon connue en soi. Les phases de fonctionnement correspondant à une stabilité de l'avion 4 (durant lesquelles l'avion 4 ne bouge pas trop) sont privilégiées.

Dans le mode de réalisation décrit ici, le module 19B de sélection sélectionne les mesures acquises par les capteurs 18 correspondant à une ou plusieurs phases de fonctionnement prédéterminées pendant un ou plusieurs intervalles de temps aussi désignés par « snapshots » (étape E40). Ces intervalles de temps peuvent avoir une durée notée T prédéterminée, identique pour toutes les phases de fonctionnement du turboréacteur 3, ou en variante démarrer et avoir une durée qui dépend de la phase de fonctionnement considérée. A titre d'exemples :

- pour une phase de ralenti au sol, le module de sélection 19B peut considérer lors de la sélection des mesures, un ou préférentiellement plusieurs intervalles de temps consécutifs ou successifs d'une durée chacun de 5 minutes à partir du moment où le module 19B détecte que le turboréacteur 3 se trouve au sol dans un régime ralenti (« idle ») ;
- pour une phase de décollage, pour laquelle on s'attend à visualiser des écarts thermiques plus importants, le module de sélection 19B peut considérer préférentiellement un unique intervalle de temps débutant lorsque celui-ci détecte que la manette moteur de l'avion 4 se trouve au-delà de la position taxi, et durant jusqu'à ce qu'un pic de la température d'échappement des gaz (EGT pour Exhaust Gaz Température) soit détecté depuis 15 secondes ;
- pour une phase de montée de l'avion (qui correspond à une position non horizontale de l'avion), le module de sélection 19B peut considérer un ou plusieurs intervalles de temps consécutifs ou successifs d'une durée de 5 minutes chacun, à partir du moment où le module de sélection 19B détecte que la manette moteur de l'avion 4 se trouve sur une position de montée ;
- pour une phase de croisière de l'avion, le module de sélection 19B peut considérer un ou préférentiellement plusieurs intervalles de temps consécutifs ou successifs d'une durée de 5 minutes chacun à partir du moment où le module de sélection 19B détecte un régime et une altitude stabilisées de l'avion 4 ;
- pour une phase de descente de l'avion, le module de sélection 19B peut considérer une ou plusieurs intervalles de temps consécutifs ou successifs d'une durée de 5 minutes chacun à partir du moment où le module de sélection 19B détecte une vitesse de l'avion 4 stabilisée à une vitesse d'approche, ou durant jusqu'à la détection d'une roue de l'avion 4 touchant le sol ;
- pour une phase d'arrêt de l'avion, le module de sélection 19B peut considérer préférentiellement un unique intervalle de temps débutant lorsqu'il détecte une commande de fin de rotation du turboréacteur 3, et durant 5 minutes ou jusqu'à la détection de l'arrêt de la rotation du réducteur 2 du turboréacteur 3.

Bien entendu ces exemples ne sont donnés qu'à titre illustratif.

Les mesures sélectionnées par le module 19B de sélection sont ensuite stockées par celui-ci localement, sous la forme d'un fichier de données par exemple, dans une mémoire non volatile du calculateur (la fréquence des mesures stockées est égale à leur fréquence d'acquisition, aux valeurs aberrantes près supprimées lors de l'étape E30).

On note que dans une variante de réalisation, les capteurs 18 peuvent être commandés pour acquérir les mesures des paramètres de fonctionnement et de contexte que dans les phases de fonctionnement choisies et durant les intervalles de temps déterminés pour ces phases de fonctionnement.

Dans le mode de réalisation décrit ici, les mesures sélectionnées par le module 19B de sélection sont ensuite compressées par le module 19C de transmission de la partie embarquée 19 au moyen d'un algorithme de compression sans perte d'information (étape E50). Le module 19C de transmission compresse par exemple lors de cette étape le fichier de données stocké dans la mémoire non volatile du calculateur et contenant les mesures sélectionnées en un fichier zip, afin de limiter le volume des données à transmettre à l'entité au sol 17.

Puis les mesures (filtrées) sélectionnées et compressées sont transmises par le module 19C de transmission se trouvant à bord de l'avion 4 à l'entité au sol 17 pour traitement et pour la surveillance du réducteur 2 (étape E60). Cette transmission est réalisée via l'interface de communication sans fil mentionnée précédemment qui peut être notamment une interface de communication par satellite. Cette transmission peut être mise en oeuvre sur détection d'un événement particulier, comme par exemple un événement opérationnel de l'avion tel que la fin du vol, ou en fonction de la situation de vie du turboréacteur 3 ou sur détection d'une situation nécessitant une intervention de maintenance sur le turboréacteur 3.

En référence à la figure 6B, les mesures sélectionnées et compressées sont reçues (i.e. obtenues) par l'entité au sol 17 et plus particulièrement par son module 17A d'obtention, via ses moyens de communication 24 et son interface de communication par satellite (étape F10). On suppose ici que les mesures reçues correspondent à plusieurs snapshots (intervalles de temps) d'une durée T chacun.

Les modules 17B et 17C de l'entité au sol 17 mettent alors en oeuvre des traitements visant à supprimer les effets liés au contexte d'acquisition des mesures reçues : il s'agit d'une part, de supprimer l'effet lié à proprement parler aux phases de fonctionnement du turboréacteur 3 (phases de vol) considérées, et d'autre part, l'effet lié aux variations des paramètres de contexte (température ambiante, pression atmosphérique, etc.) lors de ces phases de fonctionnement, autrement dit à l'environnement du turboréacteur 3 et *a fortiori* du réducteur 2. A cette fin, les modules 17B et 17C procèdent de la façon suivante.

Les mesures reçues sont scindées par le module 17B de sélection en une pluralité d'ensembles de mesures (notés E1,E2,...Ek,... k désignant un entier supérieur ou égal à 1) correspondant respectivement aux différents snapshots de durée T acquis sur lesquels les capteurs 18 ont acquis des mesures.

Les paramètres de fonctionnement, tels que les vitesses de rotation N1 et N2 des arbres basse pression et haute pression du turboréacteur 3, et les températures d'huile Toil in et Toil_out de l'huile de lubrification du réducteur 2, ainsi que les paramètres de contexte tels que la température ou la pression ambiante étant susceptibles de varier selon les phases de vol considérées, le module 17B de sélection de l'entité au sol 17 sélectionne conformément à l'invention, parmi les ensembles de mesures de durée T, E1,E2,...Ek,... celui correspondant aux mesures des paramètres les plus stables au regard d'un critère déterminé (étape F20).

On note que si seul un unique ensemble de mesures est disponible (i.e. un seul snapshot a été considéré pour la phase de fonctionnement envisagée), cet ensemble de mesures est automatiquement sélectionné (critère de stabilité implicite). On suppose ici à titre illustratif que plusieurs snapshots ont été considérés lors de l'acquisition des mesures et que plusieurs sous-ensembles E1, E2,...,Ek,... sont disponibles auprès du module de sélection 17B.

Dans le mode de réalisation décrit ici, le module 17B sélectionne l'ensemble de mesures de paramètres de fonctionnement qui maximise un critère composé d'un premier criètre de stabilité fonctionnelle et d'un deuxième critère de dispersion des mesures des paramètres par rapport à des valeurs théoriques attendues fournies par un modèle théorique.

En variante, d'autres paramètres pouvant varier selon les phases de vol où les mesures sont acquises peuvent être considérés lors de la sélection de l'ensemble de mesures, comme par exemple l'assiette de l'avion 4, le niveau de l'huile de lubrification dans le réservoir 10 du circuit d'huile, la pression de l'huile de lubrification en sortie du réducteur 2, la sévérité opérationnelle, etc.

Le critère de stabilité fonctionnelle est estimé pour chaque ensemble Ek de mesures correspondant à un intervalle de temps de durée T en évaluant un premier score de stabilité noté θ1 défini par :

$$\theta 1(k) = \frac{\sum_{i \in \Omega 1} \alpha 1_i C_i(k)}{\sum_{i \in \Omega 1} \alpha 1_i}$$

où l'ensemble $\Omega 1$ désigne un ensemble contenant les paramètres de fonctionnement N1, N2, Toii_in et Toil_out et les paramètres de contexte T12 et PS0, $\alpha 1$, avec $i \in \Omega 1$ désignent des facteurs de pondération réels supérieurs ou égaux à 0, et :

$$C_i(k) = \frac{Card\left(\cup_{j \in Ek / i(j) < imax \; et \; i(j) > imin} \, i(j)\right)}{Card\left(\cup_{j \in Ek} \, i(j)\right)}$$

où i(j) désigne la jième mesure du paramètre indexé par l'indice i comprise dans l'ensemble Ek. $C_i(k)$ désigne donc la proportion de mesures du paramètre i dans l'ensemble Ek qui a ses valeurs comprises dans une plage de valeurs prédéfinies [imin; imax] pour le paramètre i. Les valeurs imin| et imax peuvent être déterminés par expérience ou sont connus du concepteur du turboréacteur 3, Les facteurs de pondération $\alpha_1$, pour $i \in \Omega 1$ peuvent être définis par des experts ou par apprentissage. Dans un mode particulier de réalisation, ils peuvent être pris tous égaux,

Le critère de dispersion est estimé pour chaque ensemble Ek de mesures en évaluant un second score de stabilité noté $\theta_2$ défini par :

$$\theta 2(k) = \frac{\sum_{i \in \Omega 2} \alpha 2_i \sigma_i(k)}{\sum_{i \in \Omega 2} \alpha 2_i}$$

où l'ensemble $\Omega 2$ désigne un ensemble comprenant d'une part les paramètres de fonctionnement N1, N2, Toil_in et Toil_out et les paramètres de contexte T12 et PS0, et d'autre part ici, d'autres paramètres tels que le nombre d'heures d'utilisation (i.e, de rotation) du réducteur 2, le nombre de cycles d'utilisation (i.e. de rotation) du réducteur 2, etc. $\alpha 2_i$ avec $i \in \Omega 2$ désignent des facteurs de pondération réels supérieurs ou égaux à 0, et :

$$\sigma_i(k) = \frac{Card\left(\cup_{j \in Ek / \sqrt{(i(j) - \bar{i})^2} < \sigma max} \, i(j)\right)}{Card\left(\cup_{j \in Ek} \, i(j)\right)}$$

où $\bar{i}$ et $\sigma max$ désignent respectivement la moyenne et la dispersion maximale (déterminée de façon empirique) des mesures du paramètre de fonctionnement i sur la phase de vol considérée et le snapshot considéré. $\sigma_i(k)$ désigne donc la proportion des mesures de chaque paramètre de fonctionnement dans l'ensemble Ek considéré présentant une dispersion théorique déterminée. Les facteurs de pondération $\alpha 2_i$ pour $i \in \Omega 2$ peuvent être définis par des experts ou par apprentissage. Dans un mode particulier de réalisation, ils peuvent être pris tous égaux.

Le module 178 de sélection sélectionne alors l'ensemble E parmi les ensembles Ek maximisant une somme pondérée du premier score de stabilité $\theta 1$ et du second score de stabilité 02, soit :

$$E = max_{Ek, k > 1}(\beta 1 \theta 1 + \beta 2 \theta 2)$$

où $\beta 1$ et $\beta 2$ sont des facteurs de pondération réels et positifs ou nuls, fixés par expertise ou par apprentissage, et permettant de mettre l'accent sur l'un et/ou l'autre des scores de stabilité pour sélectionner l'ensemble E.

Une fois l'ensemble E sélectionné, le module 17C de normalisation procède à une normalisation des mesures des températures d'huile contenues dans l'ensemble E (étape F30).

Cette normalisation a pour but notamment de rendre comparables entre eux les indicateurs dérivés sur chaque vol et destinés à permettre la surveillance du réducteur 2, et notamment le rendement thermique du réducteur 2.

En effet, conformément à l'invention, le rendement thermique du réducteur 2 est évalué à partir d'un modèle physique définissant le rendement thermique à partir de la différence entre la température Toil_out de l'huile de lubrification en sortie du réducteur et la température Toil_in de l'huile de lubrification en entrée du réducteur. Ce gradient de températures ainsi que les conditions dans lesquelles se trouve l'huile de lubrification sont variables au cours d'un vol et d'un vol à l'autre : ils dépendent notamment du régime de rotation du turboréacteur 3 et des paramètres de contexte dans lequel se trouvent le turboréacteur 3 (température et pression atmosphérique ambiantes notamment) lorsque les mesures des températures d'huile ont été acquises. La normalisation effectuée vise donc à corriger l'influence de ces facteurs (autrement dit de l'environnement et des conditions d'acquisition) sur les températures d'huile (et autres paramètres de fonctionnement du réducteur 2) considérées pour évaluer le rendement thermique. Elle est effectuée en utilisant les mesures des paramètres de contexte présentes dans l'ensemble E et un modèle représentant les mesures de températures d'huile en fonction de ces paramètres de contexte, un tel modèle pouvant être obtenu de manière expérimentale ou théorique. Cette normalisation est réalisée par exemple comme décrit dans le document de J. Lacaille et al. intitulé « Online Normalization Algorithm for Engine Turbofan Monitoring », Annual Conférence of the Prognostics and Health Management Society, 2014.

Par ailleurs, comme mentionné ci-avant, l'évaluation du rendement thermique du réducteur 2 est réalisé, conformément à l'invention, au moyen d'un modèle physique définissant le rendement thermique à partir du gradient de températures d'huile au niveau du réducteur 2, résultant de la seconde loi de Fick.

Plus particulièrement, pour établir ce modèle, les inventeurs se ont fait l'hypothèse simplifiée que la dissipation thermique au niveau du réducteur 2 est uniquement due à l'échauffement de l'huile de lubrification. Cette hypothèse est permise grâce notamment aux étapes de sélection et de normalisation qui viennent être décrites, qui permettent de supposer constants l'échauffement thermique liée au rayonnement des parties métalliques du réducteur 2 et à la conduction entre ces parties métalliques, et de ne tenir compte, lors de la surveillance du rendement thermique du réducteur 2, que de la dissipation d'énergie dans l'huile de lubrification.

L'énergie dissipée dans l'huile de lubrification par unité de temps, notée W(t), peut s'exprimer en fonction du volume d'huile VOL(t) de lubrification ayant transité par le réducteur 2, de la conductivité thermique $v(T)$ de l'huile de lubrification (qui dépend de la température T et est connue du fournisseur d'huile de lubrification) et du gradient de température $\Delta Toil$, soit :

$$W(t) = VOL(t).v(T).\Delta Toil \quad (Eq. 1)$$

ou, en tenant compte de la relation existant entre le volume d'huile VOL(t) et le débit d'huile

$$D_{oil}(t)$$

transitant par le réducteur 2 et donnée par :

$$D_{oil}(t) = q.VOL(t).S \quad (Eq. 2)$$

où S désigne la surface de contact de l'huile de lubrification au niveau du réducteur 2 (dans l'exemple de la boîte d'engrenages considérée ici, il s'agit de la surface de contact de l'huile au niveau des dentures, définie par conception de la boîte d'engrenages) et q la masse volumique de l'huile de lubrification, sous la forme suivante :

$$W(t) = \frac{D_{oil}(t)}{qS}.v(T).\Delta Toil \quad (Eq. 3)$$

Le volume d'huile VOL(t) de lubrification ayant transité par le réducteur 2, ou de manière équivalente le débit d'huile

$$D_{oil}(t)$$

transitant par le réducteur 2, est fourni par la pompe principale 11 ; il dépend de la vitesse à laquelle est entraînée la pompe principale 11, autrement dit dans l'exemple envisagé ici, de la vitesse de rotation N2 de l'arbre du compresseur haute pression du turboréacteur 3, Le volume d'huile VOL(t) ou de façon équivalente le débit dhuile

$$D_{oil}(t),$$

peut être aisément modélisé en fonction de la vitesse de rotation N2, de façon connue de l'homme du métier, au moyen par exemple d'une loi empirique.

Cette loi empirique est généralement établie par le fournisseur de la pompe en considérant une pluralité de pompes. Il peut arriver que certains écarts soient constatés pour certaines pompes, pouvant conduire à des imprécisions. Pour éviter de telles imprécisions, dans le mode de réalisation décrit ici, l'entité au sol 17 (via par exemple son module d'évaluation 17D) peut procéder à un recalage de cette loi empirique pour la particulariser et la rendre plus représentative du fonctionnement de la pompe principale 11 équipant le turboréacteur 3.

De même, divers recalages (ou normalisations) permettant de tenir compte des conditions ambiantes correspondant au snapshot considéré peuvent être mis en oeuvre. Un tel recalage peut s'avérer pertinent par exemple pour la conductivité thermique de l'huile de lubrification : en effet, comme mentionné précédemment, celle-ci est connue du fournisseur de l'huile de lubrification pour une température de fonctionnement donnée, qui ne correspond pas nécessairement aux températures de fonctionnement constatées sur le snapshot. Or la conductivité thermique de l'huile de lubrification dépend de la température. Un recalage de la valeur fournie par le fournisseur de l'huile de lubrification en fonction de la température ambiante constatée sur le snapshot considéré peut donc être mis en oeuvre (au moyen d'un coefficient dûment déterminé).

En variante, un recalage du débit d'huile peut également être envisagé pour tenir compte d'une variation de la pression de l'huile de lubrification par rapport à une pression de référence (prise égale par exemple à la pression atmosphérique). En effet, grâce à la formule de Pitot, on peut établir un lien de proportionnalité entre un différentiel de débits d'huile et la racine carrée d'un différentiel de pressions permettant de recaler le débit en fonction de la pression.

On note que ces recalages sont optionnels.

Le module 17D dévaluation de l'entité au sol 17 évalue le rendement thermique noté $\rho$ du réducteur 2 en utilisant les équations (Eq.1) ou (Eq.3) données ci-dessus (étape F40). Plus particulièrement, le rendement thermique du réducteur 2 peut s'écrire sous la forme suivante (désignée par modèle (MOD)) :

$$\rho = \frac{WN1(t)dt - W(t)}{WN1(t)dt}$$

où $WN1(t)$ désigne l'énergie transmise par le compresseur basse pression à la soufflante du turboréacteur 3, et $W(t)$ désigne l'énergie dissipée dans l'huile de lubrification par unité de temps (donnée par l'équation (Eq.1) ou l'équation (Eq.3)), autrement dit les pertes de rendement liées à la quantité d'huile qui passe dans l'huile de lubrification au niveau de la surface de contact S. On note l'énergie $WN(t)$ dépend de la vitesse de rotation N1 de l'arbre du compresseur basse pression et peut être calculée selon la relation suivante :

$$WN1(t) = \frac{1}{2} \cdot (\omega 1)^2 \cdot \iiint R^2 dM$$

où $\omega 1$ désigne la vitesse angulaire de l'arbre du compresseur basse pression du turboréacteur 3 (qui est elle-même liée à la vitesse de rotation N1), et $\iiint R^2 dM$ désigne le moment d'inertie de l'arbre du compresseur basse pression du turboréacteur 3 (fixe pendant la vie du turboréacteur 3 sauf en cas de casse, d'une aube).

Le rendement thermique du réducteur 2 est évalué par le module 17D d'évaluation en différents points du vol de l'avion 4 en utilisant les différentes mesures de températures d'huile comprises dans l'ensemble E, c'est-à-dire à chaque instant mesuré correspondant à l'intervalle de temps de l'ensemble E.

Puis conformément à l'invention, le rendement thermique ainsi évalué est comparé par le module 17E de comparaison de l'entité au sol 17, à une base SIG de signatures de référence représentatives d'un comportement opérationnel ou d'un comportement défaillant du réducteur 2 (étape F50). Par signature, on entend ici la description d'un comportement du rendement thermique représentant un état opérationnel ou au contraire défaillant de celui-ci. Chaque signature de référence peut être associée dans la base SIG à un état correspondant du réducteur 2. La base SIG des signatures de référence est stockée ici, comme mentionnée précédemment dans la mémoire 23 de l'entité au sol 17.

Dans le mode de réalisation décrit ici, la base SIG de signatures de référence contient les signatures suivantes laissant suspecter une défaillance du réducteur 2 :

- baisse du rendement thermique à une vitesse plus ou moins grande (qui peut être spécifiée dans la base de signatures) :

    (i) une baisse de rendement rapide peut être constatée par exemple lorsqu'il existe un encrassement des dents et/ou des moyeux des engrenages du réducteur et/ou une pollution de l'huile de lubrification ;

(ii) une baisse de rendement plus lente peut être constatée lors d'un processus de dégradation du réducteur durant lequel les dents des engrenages finissent par se dégrader ;

- augmentation du rendement : la conduction métallique du réducteur 2 peut augmenter suite à une dégradation mécanique de ses engrenages. Dans ce cas, une augmentation du rendement mesuré dans l'huile peut être constatée car la dissipation thermique dans l'huile de lubrification sera réduite ;
- rendement en dehors d'une plage de valeurs prédéterminée (typiquement au-dessus d'un seuil prédéterminé noté ici THR1) : cette plage peut être fixée par expérience, ou être déterminée via un modèle numérique établi en fonction par exemple des différentes phases de fonctionnement du turboréacteur 3 et des caractéristiques techniques du réducteur 2, ou encore être construite par apprentissage (en considérant par exemple que les premiers cycles d'utilisation du réducteur 2 donnent un référentiel de valeurs considérées comme représentatives d'un fonctionnement opérationnel et sain du réducteur 2).

La comparaison du rendement thermique évalué sur la durée T aux signatures de référence de la base SIG permet au module 17F de détermination de déterminer un état courant du réducteur 2 (étape F60).

Ainsi, à titre d'exemple, le module 17F de détermination détermine que le réducteur 2 est dans un état opérationnel si le rendement thermique du réducteur 2 reste dans la plage de valeurs prédéterminée mentionnée ci-dessus (et plus particulièrement au-dessus du seuil THR1) et définie dans la base de signatures de référence SIG. Si le rendement est en dehors de la plage de valeurs prédéterminée définie dans la base SIG mais au-delà d'un seuil de fonctionnement acceptable noté THR2 (défini également dans la base SIG), un état « à surveiller » peut être déterminé par le module 17F. En deçà de ce seuil, le module 17F peut déterminer un état « défaillant » du réducteur 2 et préconiser un remplacement du réducteur 2. On note que d'autres seuils peuvent être définis correspondant à d'autres états du réducteur et notamment à des degrés de surveillance différents. La figure 7 représente une évolution du rendement thermique en fonction du temps d'utilisation du réducteur 2 sur laquelle sont représentés les seuils THR1 et THR2.

En outre, l'état du réducteur 2 peut être déterminé par le module 17F en analysant les valeurs du rendement thermique obtenues pour l'ensemble E sélectionné sur un vol de l'avion 4, ou en tenant compte également de l'évolution de ce rendement sur plusieurs vols de l'avion 4 (étude de tendance) en s'appuyant sur la base de signatures SIG.

Il convient également de noter que les signatures de référence peuvent également être constituées de courbes établies par prédiction de l'évolution du rendement.

Par ailleurs le module 17F peut, pour déterminer l'état du réducteur 2, s'appuyer sur d'autres indicateurs en plus de l'analyse du rendement thermique du réducteur 2. L'évaluation de ces indicateurs peut nécessiter l'acquisition de mesures supplémentaires par les capteurs 18 (et la normalisation le cas échéant de ces mesures).

Ainsi, le module 17F peut notamment tenir compte également d'indicateurs de santé du réducteur 2 et corréler ces indicateurs avec l'analyse de l'évolution du rendement thermique. De tels indicateurs de santé sont par exemple :

- un indicateur de marge d'échauffement de la température de l'huile de lubrification entre l'entrée et la sortie du réducteur 2 : cet indicateur correspond à la différence entre la dissipation thermique maximale possible au sein du turboréacteur 3 (définie par conception) et la dissipation thermique maximale au sein du réducteur 2 (rencontrée lors de la phase de décollage de l'avion 4) calculée à partir des températures d'huile de lubrification normalisées en entrée et en sortie du réducteur 2 ;
- un indicateur de marge de la température de l'huile de lubrification à la sortie du réducteur 2 durant la phase de décollage de l'avion 4 : cet indicateur correspond à la différence entre la valeur maximale possible pour l'huile de lubrification et la valeur maximale de la température d'huile de lubrification en sortie du réducteur 2, compte tenu de la différence entre la température ambiante correspondant au point de fonctionnement le plus chaud et au jour le plus chaud et de la température ambiante (T12) correspondant à la valeur maximale de la température d'huile de lubrification en sortie du réducteur 2 (autrement dit, à laquelle on a déduit cette différence). On note que plus le turboréacteur 3 et le réducteur 2 vieillissent, plus l'écart entre les deux différences diminue ;
- un indicateur de marge de fonctionnement en température du réducteur dans des conditions de pire cas : pour cet indicateur, la référence n'est plus la température maximale de l'huile de lubrification mais celle attendue par le réducteur. Cet indicateur tient compte du rapport entre la vitesse de rotation N1 maximale atteinte par rapport à la valeur maximale théorique de cette vitesse de rotation ;
- un indicateur de marge de pression de l'huile de lubrification lors d'une phase de fonctionnement prédéterminée (par exemple au décollage et au ralenti) du turboréacteur 3 : cet indicateur est destiné à permettre d'évaluer comment évolue la pression d'huile par rapport à une référence qui est liée à la pression minimale de la pompe principale 11. La pression d'huile en entrée du réducteur 2 doit être supérieure à un seuil pour offrir un débit d'huile suffisant. Cet indicateur correspond à la différence entre la valeur de pression qui est mesurée (projetée à une vitesse de rotation maximale de la pompe principale 11, cette vitesse étant définie ici par la vitesse de rotation N2 maximale de l'arbre du compresseur haute pression) et la valeur minimale de pression ; et

- un indicateur de marge du rendement thermique du réducteur correspondant à la différence entre le rendement thermique du réducteur évalué conformément à l'invention et la valeur minimale attendue (théorique) de ce rendement thermique (connue par conception). On note que lorsque le rendement thermique du réducteur se dégrade, l'huile va s'échauffer moins vite que ce qui est attendu.

Ces indicateurs sont calculés à partir des mesures des ensembles E sélectionnés (et normalisés), et peuvent être considérés lors de l'étape de détermination de l'état du réducteur pour évaluer l'état du réducteur.

Notamment, ces indicateurs de santé peuvent être comparés, comme le rendement thermique, à des signatures de référence permettant d'obtenir des informations complémentaires sur l'état du réducteur 2, et d'infirmer ou de confirmer le diagnostic établi en analysant le rendement thermique du réducteur 2. Ces signatures de référence, établies pour les indicateurs de santé, peuvent être stockées également dans la base de signatures SIG ou dans une autre base.

Ainsi par exemple, ces signatures de référence peuvent comprendre les signatures suivantes confortant la détection (ou la suspicion) d'un état défaillant du réducteur 2 :

- un indicateur de marge d'échauffement de la température de l'huile de lubrification entre l'entrée et la sortie du réducteur en dehors d'une plage de valeurs prédéterminée (déterminée par expérience, par modélisation ou par apprentissage comme décrit précédemment pour la plage de valeurs prédéterminée applicable au rendement thermique) ;
- un indicateur de marge de la température de l'huile de lubrification en sortie du réducteur en dehors d'une plage de valeurs prédéterminée (déterminée par expérience en tenant compte des propriétés physiques de l'huile de lubrification pour éviter la cokéfaction et la solidification de l'huile) ;
- un indicateur de marge de pression de l'huile de lubrification en dehors d'une plage de valeurs prédéterminée (déterminée par expérience, par modélisation ou par apprentissage comme décrit précédemment pour la plage de valeurs prédéterminée applicable au rendement thermique).

Dans un autre mode de réalisation, le module 17F de détermination peut également tenir compte également d'indicateurs de tendance pour interpréter les dérives observées le cas échéant sur le rendement thermique et isoler des dérives rapides. De tels indicateurs de tendance caractérisent l'usage du réducteur 2 et comprennent par exemple :

- un indicateur représentatif d'un nombre de cycles d'utilisation du réducteur 2 et/ou d'un nombre de cycles d'utilisation du réducteur 2 depuis une opération de maintenance réalisée sur le réducteur. Le nombre de cycles d'utilisation est défini ici par le nombre de décollages de l'avion 4 équipé du turboréacteur 3 ;
- un indicateur représentatif d'un temps d'utilisation du réducteur 2 et/ou d'un temps d'utilisation du réducteur 2 depuis une opération de maintenance réalisée sur le réducteur. Le temps d'utilisation du réducteur 2 est défini ici comme le temps où le réducteur 2 a été en fonctionnement ; ce temps correspond par exemple à la durée pendant laquelle le turboréacteur 3 est alimenté et la vitesse de rotation de la soufflante est non nulle ;
- un indicateur représentatif d'un nombre de cycles d'utilisation du réducteur 2 depuis une opération de maintenance réalisée sur le turboréacteur 3 (permet de suivre la fréquence des opérations de maintenance et d'indiquer le cas échéant une carence sur une de ces opérations) ;
- un indicateur représentatif d'un temps d'utilisation du réducteur 2 à haute température ;
- un indicateur représentatif d'un temps d'utilisation du réducteur 2 avec un taux de particules élevé dans l'huile de lubrification du réducteur 2.

Bien entendu ces exemples ne sont donnés qu'à titre illustratif.

Ces indicateurs peuvent être utilisés par le module 17F de détermination pour établir un indicateur de fatigue du réducteur 2. Cet indicateur de fatigue est défini par une probabilité de dysfonctionnement du réducteur 2 déterminée en fonction d'un temps « global » t_use d'utilisation du réducteur 2 évalué à partir de la somme pondérée suivante :

$$t\_use = t0 + \gamma 1 t1 + \gamma 2 t2 + \gamma 3 t3$$

Où :

- t0 représente la somme pondérée des durées de tous les cycles d'utilisation du réducteur 2, autrement dit ici des durées de tous les vols de l'avion 4 auxquels a participé le réducteur 2. Chaque cycle d'utilisation (i.e. vol de l'avion 4 ici) est associé à un facteur de pondération caractérisant la sévérité de la durée du cycle d'utilisation (i.e. du vol) sur la fatigue du réducteur 2. A titre illustratif, les valeurs minimale, maximale et moyenne de ce facteur de pondération peuvent être choisies égales respectivement à :

(i) [0.75 ; 1.25 ; 1] si -0.5 < (dref-dcycle)/dref < 0.5 où dcycle désigne la durée du cycle d'utilisation considéré, et dref une durée de référence déterminée expérimentalement ;
(ii) [0.5 ; 1 ; 0,75] si (dref-dcycle)/dref ≤ -0.5 ; et
(iii) [1 ; 1.5 ; 1.15] si 0.5≤dref-dcycle)/dref ;

- t1 désigne la durée d'utilisation du réducteur 2 à une pression ou un débit réduit(e) (c'est-à-dire à une pression, respectivement à un débit, inférieure à un seuil correspondant à la pression, respectivement au débit, attendue par conception à 50% de la vitesse de rotation de la pompe principale 11 (c'est-à-dire dans l'exemple de réducteur envisagé ici, de la vitesse de rotation N2 de l'arbre du compresseur haute pression), autrement dit correspondant à une marge en pression négative ou nulle ;
- t2 désigne la durée d'utilisation du réducteur 2 à une pression ou à un débit excessif(ve) (c'est-à-dire à une pression, respectivement à un débit, supérieure à un seuil correspondant à la pression, respectivement au débit, attendue par conception à 100% de la vitesse de rotation de la pompe principale 11 (c'est-à-dire dans l'exemple de réducteur envisagé ici, de la vitesse de rotation N2 de l'arbre du compresseur haute pression) ;
- t3 désigne la durée d'utilisation du réducteur 2 à haute température (c'est-à-dire à une température supérieure à celle attendue pour l'huile de lubrification, autrement dit encore, correspondant à une marge en température négative) ;

Les facteurs de pondération $\gamma 1, \gamma 2, \gamma 3$ peuvent être déterminés de façon empirique, de même que la loi de probabilité donnant la probabilité de dysfonctionnement du réducteur 2 en fonction du temps d'utilisation t_use.

Les différents indicateurs précités (de santé, de tendance et de fatigue) peuvent être utilisés par exemple pour déterminer si une inspection ou un démontage du réducteur 2 est nécessaire, lorsqu'au moins l'un d'entre eux présente des valeurs qui ne sont pas cohérentes avec un fonctionnement normal du réducteur 2.

On note que les différents indicateurs précités, de même que l'évolution du rendement thermique peuvent être représentés graphiquement pour faciliter leur interprétation.

L'invention via la surveillance du rendement thermique du réducteur 2, combiné le cas échéant à d'indicateurs, permet une surveillance fine de l'état du réducteur 2 et une détection rapide d'une défaillance de celui-ci (voire une anticipation de cette défaillance) permettant d'intervenir de façon efficace.

## Revendications

1. Procédé de surveillance d'un état d'un réducteur (2) d'une turbine à gaz (3), mis en oeuvre par ordinateur et comprenant, pour au moins un cycle d'utilisation du réducteur :

- une étape d'obtention (F10) d'au moins un ensemble de mesures d'une pluralité de paramètres réalisées sur au moins un intervalle de temps d'une durée déterminée lors d'au moins une phase de fonctionnement de la turbine à gaz, lesdits paramètres comprenant des paramètres de fonctionnement du réducteur incluant des températures d'une huile de lubrification du réducteur en entrée et en sortie du réducteur, et de la turbine à gaz incluant au moins un paramètre représentatif d'un régime de la turbine à gaz, ainsi qu'au moins un paramètre de contexte représentatif d'un environnement dans lequel se trouve ledit réducteur;
- une étape de sélection (F20), parmi ledit au moins un ensemble de mesures obtenu pour ladite au moins une phase de fonctionnement, d'un ensemble contenant des mesures stables au regard d'un critère de stabilité prédéterminé ;
- une étape de normalisation (F30) des températures de l'huile de lubrification en entrée et en sortie du réducteur de l'ensemble de mesures sélectionné en utilisant les mesures des paramètres de contexte de l'ensemble de mesures sélectionné ;
- une étape d'évaluation (F40), à partir de l'ensemble de mesures sélectionné dans lequel lesdites températures de l'huile de lubrification ont été normalisées, d'un rendement thermique du réducteur en utilisant un modèle physique définissant le rendement thermique à partir d'une différence entre la température de l'huile de lubrification en sortie du réducteur et la température de l'huile de lubrification en entrée du réducteur ;

ledit procédé de surveillance comprenant en outre :

- une étape de comparaison (F50) du rendement thermique évalué pour ledit au moins un cycle d'utilisation du réducteur par rapport à au moins une signature de référence représentative d'un comportement opérationnel ou d'un comportement défaillant du réducteur ; et
- une étape de détermination (F60) d'un état du réducteur en fonction du résultat de l'étape de comparaison.

**2.** Procédé de surveillance selon la revendication 1 dans lequel les paramètres de contexte comprennent une température et/ou une pression atmosphérique ambiantes.

**3.** Procédé de surveillance selon la revendication 1 ou 2 dans lequel les paramètres de fonctionnement du réducteur comprennent en outre une pression de l'huile de lubrification du réducteur.

**4.** Procédé de surveillance selon l'une quelconque des revendications 1 à 3 dans lequel l'étape de sélection (F20) de l'ensemble de mesures comprend une étape d'évaluation, pour plusieurs ensembles de mesures correspondant à un intervalle de temps ayant ladite durée déterminée :

- d'un premier score dit de stabilité, égal à une somme pondérée évaluée sur les paramètres de fonctionnement, de la proportion des mesures de chaque paramètre de fonctionnement dans l'ensemble considéré se trouvant dans une plage de valeurs prédéfinie pour ce paramètre de fonctionnement ;
- d'un second score de stabilité, égal à une somme pondérée évaluée sur les paramètres de fonctionnement, de la proportion des mesures de chaque paramètre de fonctionnement dans l'ensemble considéré présentant une dispersion théorique déterminée pour ce paramètre de fonctionnement ;

ledit ensemble de mesure sélectionné lors de l'étape de sélection correspondant à l'ensemble de mesure maximisant une somme pondérée du premier score de stabilité et du second score de stabilité.

**5.** Procédé de surveillance selon l'une quelconque des revendications 1 à 4 comprenant en outre une étape d'évaluation d'au moins un indicateur dit de santé du réducteur parmi au moins :

- un indicateur de marge d'échauffement de la température de l'huile de lubrification entre l'entrée et la sortie du réducteur ;
- un indicateur de marge de la température de l'huile de lubrification en sortie du réducteur ;
- un indicateur de marge de fonctionnement en température du réducteur dans des conditions de pire cas ;
- un indicateur de marge de pression de l'huile de lubrification lors d'une phase de fonctionnement prédéterminée de la turbine à gaz ; et
- un indicateur de marge du rendement thermique du réducteur ;

et dans lequel, l'étape de détermination de l'état du réducteur tient compte également dudit au moins un indicateur de santé évalué.

**6.** Procédé de surveillance selon l'une quelconque des revendications 1 à 5 comprenant en outre une étape d'évaluation d'au moins un indicateur dit de tendance caractérisant un usage du réducteur parmi au moins :

- un indicateur représentatif d'un nombre de cycles d'utilisation du réducteur et/ou d'un nombre de cycles d'utilisation du réducteur depuis une opération de maintenance réalisée sur le réducteur ;
- un indicateur représentatif d'un temps d'utilisation du réducteur et/ou d'un temps d'utilisation du réducteur depuis une opération de maintenance réalisée sur le réducteur ;
- un indicateur représentatif d'un nombre de cycles d'utilisation du réducteur depuis une opération de maintenance réalisée sur la turbine à gaz ;
- un indicateur représentatif d'un temps d'usage du réducteur à haute température ;
- un indicateur représentatif d'un temps d'usage du réducteur avec un taux de particules élevé dans l'huile de lubrification du réducteur ;

et dans lequel, l'étape de détermination de l'état du réducteur tient compte également dudit au moins un indicateur de tendance évalué.

**7.** Procédé de surveillance selon l'une quelconque des revendications 1 à 6 comprenant :

- une étape de détection (E30) si les mesures obtenues de la température en entrée et de la température en sortie du réducteur comprennent des valeurs aberrantes ; et
- une étape d'élimination (E30) desdites valeurs aberrantes ;

dans lequel :

- une valeur aberrante est détectée pour une dite température lorsqu'elle est incohérente avec une valeur théorique déterminée pour cette température en fonction du régime de la turbine à gaz ; et / ou
- une valeur aberrante est détectée pour la température en entrée du réducteur lorsque cette valeur présente un écart supérieur à un seuil prédéterminé par rapport à une mesure de la température ambiante ; et / ou
- une valeur aberrante est détectée pour la température en sortie du réducteur lorsque cette valeur présente un écart supérieur à un seuil prédéterminé par rapport à une température de référence ; et / ou
- une valeur aberrante est détectée pour la température en sortie du réducteur lorsque cette valeur est inférieure à la valeur de la température en entrée du réducteur.

8. Programme d'ordinateur comportant des instructions pour l'exécution des étapes du procédé de surveillance selon l'une quelconque des revendications 1 à 7 lorsque ledit programme est exécuté par un ordinateur.

9. Support d'enregistrement (22) lisible par un ordinateur sur lequel est enregistré un programme d'ordinateur selon la revendication 8.

10. Système de surveillance (1) d'un état d'un réducteur (2) d'une turbine à gaz (3), ledit système (1) comprenant ladite turbine à gaz (3) et un processeur (20) configuré pour exécuter des instructions d'un programme d'ordinateur (20), ce programme d'ordinateur définissant des modules activés pour au moins un cycle d'utilisation du réducteur, lesdits modules comprenant :

- un module d'obtention (17A), configuré pour obtenir au moins un ensemble de mesures d'une pluralité de paramètres réalisées sur au moins un intervalle de temps d'une durée déterminée lors d'au moins une phase de fonctionnement de la turbine à gaz, lesdits paramètres comprenant des paramètres de fonctionnement du réducteur incluant des températures d'une huile de lubrification du réducteur en entrée et en sortie du réducteur, et de la turbine à gaz incluant au moins un paramètre représentatif d'un régime de la turbine à gaz, ainsi qu'au moins un paramètre de contexte représentatif d'un l'environnement dans lequel se trouve ledit réducteur;
- un module de sélection (17B), configuré pour sélectionner parmi ledit au moins un ensemble de mesures obtenu pour ladite au moins une phase de fonctionnement, un ensemble contenant des mesures stables au regard d'un critère de stabilité prédéterminé ;
- un module de normalisation (17C), configuré pour normaliser les mesures des températures de l'huile de lubrification en entrée et en sortie du réducteur de l'ensemble de mesures sélectionné en utilisant les mesures des paramètres de contexte de l'ensemble de mesures sélectionné ;
- un module d'évaluation (17D), configuré pour évaluer à partir de l'ensemble de mesures sélectionné dans lequel lesdites températures de l'huile de lubrification ont été normalisées, un rendement thermique du réducteur en utilisant un modèle physique définissant le rendement thermique à partir d'une différence entre la température de l'huile de lubrification en sortie du réducteur et la température de l'huile de lubrification en entrée du réducteur ; ledit système comprenant en outre :

- un module de comparaison (17E), configuré pour comparer le rendement thermique évalué pour ledit au moins un cycle d'utilisation du réducteur par rapport à au moins une signature de référence représentative d'un comportement opérationnel ou d'un comportement défaillant du réducteur ; et
- un module de détermination (17F), configuré pour déterminer un état du réducteur en fonction du résultat obtenu par le module de comparaison, ledit système de surveillance comprenant en outre une pluralité de capteurs (18) embarqués dans la turbine à gaz configurés pour acquérir lesdites mesures des paramètres de fonctionnement et de contexte sur une pluralité d'intervalles de temps ayant ladite durée déterminée.

11. Système de surveillance (1) selon la revendication 10 dans lequel ladite turbine à gaz (3) équipe un aéronef (4) compris dans ledit système de surveillance (1) et comprend en outre :

- un module de filtrage (19A) des mesures acquises par ladite pluralité de capteurs, configuré pour éliminer desdites mesures celles présentant des valeurs aberrantes au regard d'au moins un critère prédéterminé ;
- un module de sélection (19B), configuré pour sélectionner parmi les mesures filtrées, celles correspondant à au moins une phase de fonctionnement prédéterminée de l'aéronef ; et
- un module de transmission (19C) configuré pour transmettre au module d'obtention les mesures sélectionnées.

12. Système de surveillance selon la revendication 11 comprenant en outre un module de compression, configuré pour compresser les mesures sélectionnées, le module de transmission étant configuré pour transmettre au module d'obtention les mesures sélectionnées sous forme compressée.

13. Système de surveillance selon l'une quelconque des revendications 10 à 12 dans lequel la durée déterminée de la pluralité d'intervalles de temps dépend d'une phase de fonctionnement dans laquelle se trouve l'aéronef.

**Patentansprüche**

1. Verfahren zur Überwachung eines Zustands eines Untersetzungsgetriebes (2) einer Gasturbine (3), das von einem Rechner durchgeführt wird und für mindestens einen Verwendungszyklus des Untersetzungsgetriebes umfasst:

   - einen Schritt des Erhaltens (F10) mindestens einer Gruppe von Messungen einer Vielzahl von Parametern, die über mindestens ein Zeitintervall einer bestimmten Dauer bei mindestens einer Betriebsphase der Gasturbine durchgeführt werden, wobei die Parameter Betriebsparameter des Untersetzungsgetriebes einschließlich der Temperaturen eines Schmieröls des Untersetzungsgetriebes am Eingang und am Ausgang des Untersetzungsgetriebes, und der Gasturbine einschließlich mindestens eines Parameters, der für einen Betriebszustand der Gasturbine repräsentativ ist, sowie mindestens einen Kontextparameter umfassen, der für eine Umgebung repräsentativ ist, in der sich das Untersetzungsgetriebe befindet;
   - einen Auswahlschritt (F20) aus der mindestens einen Gruppe von Messungen, die für die mindestens eine Betriebsphase erhalten wurde, einer Gruppe, die stabile Messungen im Hinblick auf ein vorher festgelegtes Stabilitätskriterium enthält;
   - einen Standardisierungsschritt (F30) der Temperaturen des Schmieröls am Eingang und am Ausgang des Untersetzungsgetriebes der gewählten Gruppe von Messungen mittels Verwendung der Messungen der Kontextparameter der ausgewählten Gruppe von Messungen;
   - einen Evaluierungsschritt (F40), ausgehend von der ausgewählten Gruppe von Messungen, in der die Temperaturen des Schmieröls standardisiert wurden, einer thermischen Leistung des Untersetzungsgetriebes mittels Verwendung eines physikalischen Modells, das die thermische Leistung ausgehend von einer Differenz zwischen der Temperatur des Schmieröls am Ausgang des Untersetzungsgetriebes und der Temperatur des Schmieröls am Eingang des Untersetzungsgetriebes definiert;

   wobei das Überwachungsverfahren ferner umfasst:

   - einen Vergleichsschritt (F50) der evaluierten thermischen Leistung für den mindestens einen Verwendungszyklus des Untersetzungsgetriebes im Verhältnis zu mindestens einer Referenzsignatur, die für ein operatives Verhalten oder ein Fehlverhalten des Untersetzungsgetriebes repräsentativ ist; und
   - einen Bestimmungsschritt (F60) eines Zustands des Untersetzungsgetriebes in Abhängigkeit vom Ergebnis des Vergleichsschritts.

2. Überwachungsverfahren nach Anspruch 1, wobei die Kontextparameter eine Umgebungstemperatur und/oder einen atmosphärischen Umgebungsdruck umfassen.

3. Überwachungsverfahren nach Anspruch 1 oder 2, wobei die Betriebsparameter des Untersetzungsgetriebes ferner einen Druck des Schmieröls des Untersetzungsgetriebes umfassen.

4. Überwachungsverfahren nach einem der Ansprüche 1 bis 3, wobei der Auswahlschritt (F20) der Gruppe von Messungen einen Evaluierungsschritt für mehrere Gruppen von Messungen umfasst, die einen Zeitintervall entsprechen, das die bestimmte Dauer hat:

   - eines ersten sogenannten Stabilitätsscores, der gleich einer gewichteten Summe, die anhand der Betriebsparameter evaluiert wurde, des Anteils der Messungen jedes Betriebsparameters in der entsprechenden Gruppe ist, der sich in einem vorher festgelegten Wertebereich für diesen Betriebsparameter befindet;
   - eines zweiten Stabilitätsscores, der gleich einer gewichteten Summe, die anhand der Betriebsparameter evaluiert wurde, des Anteil der Messungen jedes Betriebsparameters in der entsprechenden Gruppe ist, der eine für diesen Betriebsparameter bestimmte theoretische Dispersion aufweist; wobei die beim Auswahlschritt ausgewählte Gruppe von Messungen der Gruppe von Messungen entspricht, die eine gewichtete Summe des ersten Stabilitätsscores und des zweiten Stabilitätsscores maximiert.

5. Überwachungsverfahren nach einem der Ansprüche 1 bis 4, das ferner einen Evaluierungsschritt mindestens eines sogenannten Gesundheitsindikators des Untersetzungsgetriebes umfasst von mindestens:

- einem Indikator der Marge der Erwärmung der Temperatur des Schmieröls zwischen dem Eingang und dem Ausgang des Untersetzungsgetriebes;
- einem Indikator der Marge der Temperatur des Schmieröls am Ausgang des Untersetzungsgetriebes;
- einem Indikator der Marge des Betriebs in Temperatur des Untersetzungsgetriebes unter Worst-Case-Bedingungen;
- einem Indikator der Marge des Drucks des Schmieröls bei einer vorher festgelegten Betriebsphase der Gasturbine; und
- einem Indikator der Marge der thermischen Leistung des Untersetzungsgetriebes;

und wobei der Schritt zur Bestimmung des Zustands des Untersetzungsgetriebes ebenfalls mindestens einen evaluierten Gesundheitsindikator berücksichtigt.

6. Überwachungsverfahren nach einem der Ansprüche 1 bis 5, das ferner einen Evaluierungsschritt mindestens eines sogenannten Trendindikators umfasst, der einen Gebrauch des Untersetzungsgetriebes kennzeichnet, von mindestens:

- einem Indikator, der für eine Anzahl von Nutzungszyklen des Untersetzungsgetriebes und/oder eine Anzahl von Nutzungszyklen des Untersetzungsgetriebes seit einer am Untersetzungsgetriebe durchgeführten Wartungsmaßnahme repräsentativ ist;
- einem Indikator, der für eine Nutzungszeit des Untersetzungsgetriebes und/oder eine Nutzungszeit des Untersetzungsgetriebes seit einer am Untersetzungsgetriebe durchgeführten Wartungsmaßnahme repräsentativ ist;
- einem Indikator, der für eine Anzahl von Nutzungszyklen des Untersetzungsgetriebes seit einer an der Gasturbine durchgeführten Wartungsmaßnahme repräsentativ ist;
- einem Indikator, der für eine Zeit des Gebrauchs des Untersetzungsgetriebes bei hoher Temperatur repräsentativ ist;
- einem Indikator, der für eine Zeit des Gebrauchs des Untersetzungsgetriebes mit einem erhöhten Partikelsatz im Schmieröl des Untersetzungsgetriebes repräsentativ ist;

und wobei der Schritt zur Bestimmung des Zustands des Untersetzungsgetriebes ebenfalls mindestens einen evaluierten Trendindikator berücksichtigt.

7. Überwachungsverfahren nach einem der Ansprüche 1 bis 6, das umfasst:

- einen Detektionsschritt (E30), ob die von der Temperatur am Eingang und von der Temperatur am Ausgang des Untersetzungsgetriebes erhaltenen Messungen abwegige Werte umfassen; und
- einen Schritt der Beseitigung (E30) der abwegigen Werte;

wobei:

- ein abwegiger Wert für eine Temperatur ermittelt wird, wenn er mit einem für diese Temperatur in Abhängigkeit vom Betriebszustand der Gasturbine ermittelten theoretischen Wert inkohärent ist; und/oder
- ein abwegiger Wert für die Temperatur am Eingang des Untersetzungsgetriebes ermittelt wird, wenn dieser Wert eine Abweichung aufweist, die über einem vorher festgelegten Grenzwert im Verhältnis zu einer Messung der Umgebungstemperatur liegt; und/oder
- ein abwegiger Wert für die Temperatur am Ausgang des Untersetzungsgetriebes ermittelt wird, wenn dieser Wert eine Abweichung aufweist, die über einem vorher festgelegten Grenzwert im Verhältnis zu einer Referenztemperatur liegt; und/oder
- ein abwegiger Wert für die Temperatur am Ausgang des Untersetzungsgetriebes ermittelt wird, wenn dieser Wert unter dem Wert der Temperatur am Eingang des Untersetzungsgetriebes liegt.

8. Rechnerprogramm, das Befehle für die Ausführung der Schritte des Überwachungsverfahrens nach einem der Ansprüche 1 bis 7 aufweist, wenn das Programm von einem Rechner ausgeführt wird.

9. Rechnerlesbares Speichermedium (22), auf dem ein Rechnerprogramm nach Anspruch 8 gespeichert ist.

10. System zur Überwachung (1) eines Zustands eines Untersetzungsgetriebes (2) einer Gasturbine (3), wobei das System (1) die Gasturbine (3) und einen Prozessor (20) umfasst, der ausgelegt ist, um Befehle eines Rechnerprogramms (20) auszuführen, wobei dieses Rechnerprogramm für mindestens einen Verwendungszyklus des Untersetzungsgetriebes aktivierte Module definiert, wobei die Module umfassen:

- ein Erfassungsmodul (17A), das ausgelegt ist, um mindestens eine Gruppe von Messungen einer Vielzahl von Parametern zu erhalten, die über mindestens ein Zeitintervall einer bestimmten Dauer bei mindestens einer Betriebsphase der Gasturbine durchgeführt werden, wobei die Parameter Betriebsparameter des Untersetzungsgetriebes einschließlich der Temperaturen eines Schmieröls des Untersetzungsgetriebes am Eingang und am Ausgang des Untersetzungsgetriebes, und der Gasturbine einschließlich mindestens eines Parameters, der für einen Betriebszustand der Gasturbine repräsentativ ist, sowie mindestens einen Kontextparameter umfassen, der für eine Umgebung repräsentativ ist, in der sich das Untersetzungsgetriebe befindet;
- ein Auswahlmodul (17B), das ausgelegt ist, um aus der mindestens einen Gruppe von Messungen, die für die mindestens eine Betriebsphase erhalten wurde, eine Gruppe auszuwählen, die stabile Messungen im Hinblick auf ein vorher festgelegtes Stabilitätskriterium enthält;
- ein Standardisierungsmodul (17C), das ausgelegt ist, um die Messungen der Temperaturen des Schmieröls am Eingang und am Ausgang des Untersetzungsgetriebes der gewählten Gruppe von Messungen mittels Verwendung der Messungen der Kontextparameter der ausgewählten Gruppe von Messungen zu standardisieren;
- ein Evaluierungsmodul (17D), das ausgelegt ist, um ausgehend von der ausgewählten Gruppe von Messungen, in der die Temperaturen des Schmieröls standardisiert wurden, eine thermische Leistung des Untersetzungsgetriebes mittels Verwendung eines physikalischen Modells zu evaluieren, das die thermische Leistung ausgehend von einer Differenz zwischen der Temperatur des Schmieröls am Ausgang des Untersetzungsgetriebes und der Temperatur des Schmieröls am Eingang des Untersetzungsgetriebes definiert;

wobei das System ferner umfasst:

- ein Vergleichsmodul (17E), das ausgelegt ist, um die evaluierte thermische Leistung für den mindestens einen Verwendungszyklus des Untersetzungsgetriebes im Verhältnis zu mindestens einer Referenzsignatur zu vergleichen, die für ein operatives Verhalten oder ein Fehlverhalten des Untersetzungsgetriebes repräsentativ ist; und
- ein Bestimmungsmodul (17F), das ausgelegt ist, um einen Zustand des Untersetzungsgetriebes in Abhängigkeit von dem Ergebnis zu bestimmen, das von dem Vergleichsmodul erhalten wurde, wobei das Überwachungssystem ferner eine Vielzahl von in die Gasturbine eingebauten Sensoren (18) umfasst, die ausgelegt sind, um die Messungen der Betriebs- und Kontextparameter über eine Vielzahl von Zeitintervallen, die die bestimmte Dauer haben, zu sammeln.

11. Überwachungssystem (1) nach Anspruch 10, wobei die Gasturbine (3) ein Luftfahrzeug (4) ausstattet, das in dem Überwachungssystem (1) enthalten ist und ferner umfasst:

- ein Filtermodul (19A) der von der Vielzahl von Sensoren gesammelten Messungen, das ausgelegt ist, um von den Messungen diejenigen auszusortieren, die im Hinblick auf mindestens ein vorher festgelegtes Kriterium abwegige Werte aufweisen;
- ein Auswahlmodul (19B), das ausgelegt ist, um aus den gefilterten Messungen diejenigen auszuwählen, die mindestens einer vorher festgelegten Betriebsphase des Luftfahrzeugs entsprechen; und
- ein Übertragungsmodul (19C), das ausgelegt ist, um die ausgewählten Messungen an das Erfassungsmodul zu übertragen.

12. Überwachungssystem nach Anspruch 11, das ferner ein Kompressionsmodul umfasst, das ausgelegt ist, um die ausgewählten Messungen zu komprimieren, wobei das Übertragungsmodul ausgelegt ist, um die ausgewählten Messungen an das Erfassungsmodul in komprimierter Form zu übertragen.

13. Überwachungssystem nach einem der Ansprüche 10 bis 12, wobei die bestimmte Dauer der Vielzahl von Zeitintervallen von einer Betriebsphase abhängt, in der sich das Luftfahrzeug befindet.

## Claims

1. Method for monitoring a status of a reduction gear (2) of a gas turbine (3) implemented by a computer and comprising, for at least one duty cycle of the reduction gear:

- a step of obtaining (F10) at least one set of measurements of a plurality of parameters accomplished over at least one time interval of a determined duration during at least one operating phase of the gas turbine, said parameters comprising the operating parameters of the reduction gear including temperatures of a lubricating oil of the reduction gear at the inlet and at the outlet of the reduction gear, and of the gas turbine including at least one parameter representing a speed of the gas turbine, as well as at least one context parameter representing an environment in which said reduction gear is located;
- a step of selecting (F20), among said at least one set of measurements obtained for said at least one operating phase, of a set containing measurements that are stable with regard to a predetermined stability criterion;
- a step of normalizing (F30) temperatures of the lubricating oil at the inlet and at the outlet of the reduction gear of the set of selected measurements by using the measurements of the context parameters of the set of selected measurements;
- a step of evaluating (F40), based on the set of selected measurements in which said temperatures of the lubricating oil have been normalized, a thermal efficiency of the reduction gear by using a physical model defining the thermal efficiency based on a difference between the temperature of the lubricating oil at the outlet of the reduction gear and the temperature of the lubricating oil at the inlet of the reduction gear;

said monitoring method also comprising:

- a step of comparing (F50) the thermal efficiency evaluated for said at least one duty cycle of the reduction gear with respect to at least one reference signature representing an operational behavior or a faulty behavior of the reduction gear; and
- a step of determining (F60) a status of the reduction gear depending on the result of the comparison step.

2. The monitoring method according to claim 1, wherein the context parameters comprises a temperature and/or an ambient atmospheric pressure.

3. The monitoring method according to claim 1 or 2, wherein the operating parameters of the reduction gear also comprise a pressure of the lubricating oil of the reduction gear.

4. The monitoring method according to any one of claims 1 to 3, wherein the step of selecting (F20) the set of measurements comprises a step of evaluating, for several sets of measurements corresponding to a time interval with said determined duration:

- of a first score called stability equal to a weighted sum, evaluated over the operating parameters, of the proportion of the measurements of each operating parameter in the set in question located in a predefined range of values for this operating parameter;
- of a second stability score, equal to a weighted sum evaluated over the operating parameters, of the proportion of the measurements of each operating parameter in the set in question having a determined theoretical dispersion for this operating parameter;

said set of measurements selected during the selection step corresponding to the set of measurements maximizing a weighted sum of the first stability score and of the second stability score.

5. The monitoring method according to any one of claims 1 to 4, also comprising a step of evaluating at least one health indicator of the reduction gear among at least:

- a heating margin indicator of the temperature of the lubricating oil between the inlet and the outlet of the reduction gear;
- a margin indicator of the temperature of the lubricating oil at the outlet of the reduction gear;
- an operating temperature margin indicator of the reduction gear under worst case conditions;
- a pressure margin indicator of the lubricating oil during a predetermined operating phase of the gas turbine; and
- a thermal efficiency margin indicator of the reduction gear;

and wherein the step of determining the status of the reduction gear also takes into account said at least one evaluated health indicator.

6. The monitoring method according to any one of claims 1 to 5 also comprising a step of evaluating at least one trending indicator characterizing one use of the reduction gear among at least:

- an indicator representing a number of duty cycles of the reduction gear and/or a number of duty cycles of the reduction gear since a maintenance operation carried out on the reduction gear;
- an indicator representing an operating time of the reduction gear and/or an operating time of the reduction gear since a maintenance operation carried out on the reduction gear;
- an indicator representing a number of duty cycles of the reduction gear since a maintenance operation carried out on the gas turbine;
- an indicator representing an operating time of the reduction gear at high temperature;
- an indicator representing an operating time of the reduction gear with a high particle level in the lubricating oil of the reduction gear;

and wherein the step of determining the status of the reduction gear also takes into account said at least one evaluated trending indicator.

7. The monitoring method according to any one of claims 1 to 6, comprising:

- a step of detecting (E30) whether the measurements obtained of the temperature at the inlet and of the temperature at the outlet of the reduction gear comprise outliers; and
- a step of eliminating (E30) said outliers;

wherein:

- an outlier is detected for a said temperature when it is inconsistent with a theoretical value determined for this temperature depending on the speed of the gas turbine; and/or
- an outlier is detected for the temperature at the inlet of the reduction gear when this value has a deviation greater than a predetermined threshold with respect to a measurement of the ambient temperature; and/or
- an outlier is detected for the temperature at the outlet of the reduction gear when this value has a deviation greater than a predetermined threshold with respect to a reference temperature; and/or
- an outlier is detected for the temperature at the outlet of the reduction gear when this value is less than the value of the temperature at the inlet of the reduction gear.

8. A computer program including instructions for the execution of the steps of the monitoring method according to any one of claims 1 to 7 when said program is executed by a computer.

9. A recording medium (22) readable by a computer on which is recorded a computer program according to claim 8.

10. A system for monitoring (1) a status of a reduction gear (2) of a gas turbine (3), said system (1) comprising said gas turbine (3) and a processor (20) configured for executing the instructions of a computer program (20), this computer program defining activity modules for at least one cycle of operation of the reduction gear, said modules comprising:

- an acquisition module (17A), configured to obtain at least one set of measurements of a plurality of parameters accomplished over at least one time interval with a determined duration during at least one operating phase of the gas turbine, said parameters comprising operating parameters of the reduction gear including temperatures of a lubricating oil of the reduction gear at the inlet and at the outlet of the reduction gear, and of the gas turbine, including at least one parameter representing a speed of the gas turbine, as well as at least one context parameter representing an environment in which said reduction gear is located;
- a selection module (17B), configured to select, among said at least one set of measurements obtained for said at least one operating phase, a set containing measurements that are stable with regard to a predetermined stability criterion;
- a normalization module (17C) configured to normalize the measurements of the temperature of the lubricating oil at the inlet and at the outlet of the reduction gear of the set of selected measurements by using the measurements of the context parameters of the set of selected measurements;
- an evaluation module (17D), configured to evaluate, based on the set of selected measurements in which said temperatures of the lubricating oil were normalized, a thermal efficiency of the reduction gear, by using a physical model defining the thermal efficiency based on a difference between the temperature of the lubricating oil at the outlet of the reduction gear and the temperature of the lubricating oil at the inlet of the reduction gear;

said system also comprising:

- a comparison module (17E)configured to compare the thermal efficiency evaluated for said at least one duty cycle of the reduction gear with respect to at least one reference signature representing an operational behavior or a faulty behavior of the reduction gear; and

- a determination module (17F) configured to determine a status of the reduction gear depending on the result obtained by the comparison module, said monitoring system also comprising a plurality of on-board sensors (18) in the gas turbine configured to acquire said measurements of the operating and context parameters over a plurality of time intervals having said determined duration.

11. The monitoring system (1) according to claim 10 wherein said gas turbine (3) equips an aircraft (4) comprised in said monitoring system (1) and also comprises:

- a module (19A) for filtering the measurements acquired by said plurality of sensors, configured to eliminate from said measurements those having outliers with respect to at least one predetermined criterion;
- a selection module (19B)configured to select among the filtered measurements those corresponding to at least one predetermined operating phase of the aircraft; and
- a transmission module (19C) configured to transmit the selected measurements to the acquisition module.

12. The monitoring system according to claim 11, also comprising a compression module, configured to compress the selected measurements, the transmission module being configured to transmit the selected measurements to the acquisition module in a compressed form.

13. The monitoring system according to any one of claims 10 to 12, wherein the determined duration of the plurality of time intervals depends on an operating phase in which the aircraft is located.

[Fig. 1]

[Fig. 2]

[Fig. 3]

[Fig. 4]

[Fig. 5]

[Fig. 6A]

[Fig. 6B]

[Fig. 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170145852 A1

**Littérature non-brevet citée dans la description**

- **J. LACAILLE et al.** Online Normalization Algorithm for Engine Turbofan Monitoring. *Annual Conférence of the Prognostics and Health Management Society,* 2014